# EUROPÄISCHE PATENTSCHRIFT

(11) **EP 0 920 154 B1**
(45) Veröffentlichungstag und Bekanntmachung des Hinweises auf die Patenterteilung: **03.11.2004**
(21) Anmeldenummer: 98121785.4
(22) Anmeldetag: 16.11.1998
(51) Int. Cl.: H04L 12/00, G06F 13/42

(54) **Verfahren und Schaltungsanordnung zur selektiven digitalen seriellen Übertragung**
Method and circuit for selective digital serial transmission
Méthode et circuit de transmission numérique serielle selective

(30) Priorität: 24.11.1997 DE 19752031
(43) Veröffentlichungstag der Anmeldung: 02.06.1999
(73) Patentinhaber: STMicroelectronics GmbH, 85630 Grasbrunn (DE)
(72) Erfinder: Heinrich, Peter, 83024 Rosenheim (DE)
(74) Vertreter: Hirsch, Peter, Dipl.-Ing.

(56) Entgegenhaltungen:
- EP-A- 0 788 043
- WO-A-96/21974
- DE-A- 19 547 000

## Beschreibung

Die Erfindung betrifft ein Verfahren und eine Schaltungsanordnung zur selektiven digitalen Übertragung von Bitfolgen zwischen einem übergeordneten Schaltungsteil und einem untergeordneten Schaltungsteil. In Übernahme aus dem englischsprachigen Raum spricht man im Zusammenhang mit einem übergeordneten und einem untergeordneten Schaltungsteil auch häufig von Master und Slave. Für den übergeordneten Schaltungsteil ist auch der Begriff Host gebräuchlich. Bei praktischen Ausführungsformen kann der übergeordnete Schaltungsteil ein Microcontroller und der untergeordnete Schaltungsteil ein Funktionsblock mit Funktionseinrichtungen wie Steuereinrichtungen und Meßeinrichtungen sein.

Üblicherweise wirken der übergeordnete Schaltungsteil und der untergeordnete Schaltungsteil über ein Bussystem zusammen, mit dem digitale Signale zwischen dem übergeordneten Schaltungsteil und dem untergeordneten Schaltungsteil übertragen werden können. Die Signalübertragung über das Bussystem unterliegt einem definierten Protokoll, wobei man häufig von einem Busprotokoll spricht.

Ein bekanntes Bussystem ist das sogenannten SPI (Serial Peripheral Interface).

Aus der WO 96/21974 A ist ein SPI für die Signalverteilung zwischen Glückspielautomaten in einem Spielsaal bekannt, bei welchem Signale von einem Leistungstreiberchip mittels einer SPI-Schnittstelle an Ausgangskanäle geliefert werden. Jeder Ausgangskanal ist gegen Kurzschluß und Überspannung geschützt, wobei zu Diagnosezwecken im Fall eines Kurzschlusses oder einer offenen Leitung eine Fehlerrücklesung stattfindet.

Ein Rücklesen findet auch bei einem aus der DE 195 47 00 A bekannten Kommunikationsaetz mit einer Vielzahl über eine Busleitung verbundener Netzknoten statt. Dabei leitet ein empfangender Netzknoten Empfangsdaten an einen sendenden Netzknoten zurück, wenn er in den Empfangsdaten keine Fehler detektiert hat.

Die Gegenstände der unabhängigen Ansprüche 1 und 12 der vorliegenden Anmeldung unterscheiden sich von der in DE 195 47 00 A genannten Lehre dadurch, dass während ein und desselben Taktes das zu dem jeweiligen Takt gehörende Bit der seriell empfangenen Bitfolge in die serielle Schnittstelle geschrieben als auch der daraus resultierende Speicherinhalt, der zu diesem Bit gehört, aus der seriellen Schnittstelle in die übergeordnete Einrichtung rückgelesen wird.

Zu einem SPI-Bussystem gehört ein SPI-Bus-Protokoll. Dieses ist beispielsweise dargestellt in dem vom Februar 1997 stammenden Datenblatt der Firma Aureal Semiconductor, betreffend die Schaltung VSP 901, Seiten 12 und 13.

Die in Fig. 7 dieser Veröffentlichung gezeigte Signaldarstellung ist in der beiliegenden Fig. 13 gezeigt. Dabei bedeuten:
- SCK:: Serieller Takt
- HREQ:: Host-Anforderungssignal
- SS:: Slave-Auswahlsignal
- MOSI:: Master Out Slave In (Übertragung vom Master zum Slave)
- MISO:: Master In Slave Out (Übertragung vom Slave zum Master
- SPICMD:: Zusätzliches Signal, welches das SPI-Protokoll um die Angabe erweitert, ob der Master auf den SPI-Bus eine Registeradresse oder Registerdaten gegeben hat.

Anhand von Fig. 13 werden nun kurz einige Betriebsmerkmale des SPI-Bus-Protokolls betrachtet.

Das Signal HREQ weist einen Logikwert L (LOW) auf, wenn der Master für den Empfang eines 24-Bit-Datenwortes bereit ist. Der Slave ist mit dem Master über eine Slave-Auswahlleitung SS verbunden. Über diese Slave-Auswahlleitungen teilt der Host dem Slave mit, wenn er an den Slave jeweilige Dateninformation senden möchte. Das jeweilige

Datenwort wird über die MOSI-Leitungen vom Host oder Master zum Slave übertragen und ein zuvor übertragenes Datenwort wird über die MISO-Leitung zum Master oder Host zurückübertragen. Beim ersten Taktimpuls des nächsten zu übertragenden Datenwortes wird HREQ vom Master auf den Logikwert H (HIGH) gesetzt. Der Master tastet SPICMD ab und setzt HREQ auf H, wenn er zum Empfang des nächsten Datenwortes bereit ist. Wenn SPICMD auf L ist, weist dies auf die Übertragung einer Registeradresse hin. Ist SPICMD auf dem Wert H, zeigt dies die Übertragung eines Registerwertes an. Der Host deaktiviert die SS-Leitung, nachdem er das letzte Bit in den Master geschrieben hat. Deaktiviert der Host die SS-Leitung des empfangenden Masters bevor dem Ende der Datenwortübertragung, weil der Host erst eine andere Aufgabe mit höherer Priorität erledigen muß, wird die Datenwortübertragung abgebrochen und verwirft der Master die empfangenen Daten.

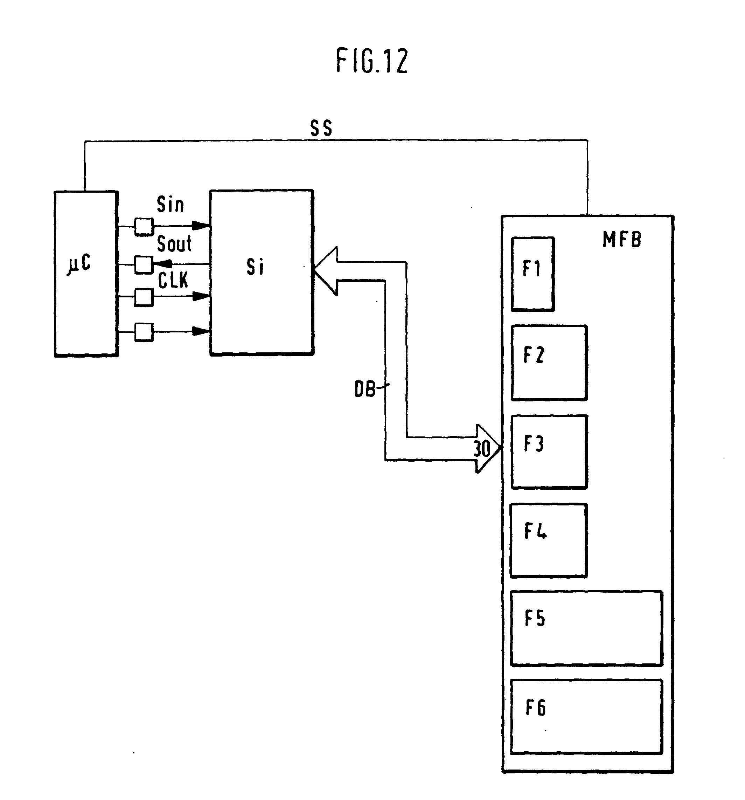

Fig. 12 zeigt in Blockschaltbilddarstellung eine für das SPI-Protokoll geeignete Schaltungsanordnung mit einem übergeordneten Schaltungsteil in Form beispielsweise eines Microcontrollers µC, mit einer seriellen Schnittstelle SI und mit einem untergeordneten Schaltungsteil in Form eines Multifunktionsblockes MFB, in dem beispielsweise sechs Funktionen FB1 bis FB6 untergebracht sind. Insgesamt benötigen die Funktionen FB1 bis FB6 beispielsweise ein Datenfeld mit einer Datenfeldbreite oder Datenbitzahl von 30. Ein die serielle Schnittstelle SI und den Multifunktionsblock MFB verbindender Datenbus DB weist daher eine entsprechende Datenfeldbreite von 30 Bit auf. Der Microcontroller µC und die serielle Schnittstelle SI sind über drei Anschlüsse miteinander verbunden: einem Serielleingang Sin, über welchen serielle Bitfolgen vom Microcontroller µC an die serielle Schnittstelle SI übertragen werden können, einem Seriellausgang Sout, über welchen serielle Bitfolgen von der serielle Schnittstelle SI an den Microcontroller µC übertragen werden können, und einem Taktanschluß CLK, über welchen der seriellen Schnittstelle SI ein Systemtakt zugeführt werden kann.

Bei einer Datenübertragung müssen jedesmal die Daten für alle Funktionen FB1 bis FB6 übertragen werden. Es ist somit jedesmal eine Datenübertragung mit einer Datenbreite von 30 Bit erforderlich. Muß eine Funktion umprogrammiert werden, muß ein Überschreiben aller Funktionnen FB1 bis FB6 erfolgen. Dies bringt das Risiko mit sich, daß Funktionen, deren Programmierung an sich unverändert bleiben soll, fälschlicherweise anders programmiert werden.

Das SPI-Protokoll ist mit einigen Problemen behaftet.
1. Wenn während der Übertragung vom Master zum Slave ein Datenwert korrumpiert wird, wird der korrumpierte oder verfälschte Datenwert in das Zielregister des Slave geschrieben, ohne daß der Master davon erfährt, ob eine korrekte oder inkorrekte Datenübertragung stattgefunden hat.
2. Wenn ein Datenwert innerhalb eines Slaves korrumpiert wird, wird der Master hiervon nicht benachrichtigt. Um dieses Problem zu überwinden, müßten eine (beim SPI-Protokoll nicht vorgesehene) Überprüfung des gesamten Rücklesevorgangs und eine erneute Schreiboperation durchgeführt werden. Dies würde Belegungszeit des Masters kosten und die gesamte Datenübertragung verzögern.
3. Das SPI-Protokoll verwendet eine feste Datenwortlänge. Jedes Bit innerhalb dieser festen Datenwortlänge hat eine bestimmte Funktion. Wird einer der Master oder der Slaves hinsichtlich einer oder eines Teils seiner Funktionen geändert, müssen alle Funktionen neu programmiert werden, auch die nicht zu ändernden Funktionen. Das heißt, auch die nicht neu zu programmierenden Funktionen müssen neu überschrieben werden. Dies erhöht die Gefahr einer fälschlichen Programmierungsänderung.
4. Sollen eine oder mehrere Funktionen nachträglich hinzugefügt werden, erfordert dies in der Regel eine hardwaremäßige Änderung. Die zwischen Master und Slave angeordnete Schnittstelle ist für die fest vorgegebene Datenwortlänge ausgelegt, bei dem in Fig. 12 gezeigten Beispiel für eine Datenwortlänge von 30 Bit. Wird durch das Hinzufügen zusätzlicher Funktionen eine Vergrößerung der Datenwortlänge erforderlich, müssen sowohl die Schnittstelle als auch die Ablaufsteuerung geändert werden.

Mit der vorliegenden Erfindung sollen solche Probleme überwunden werden. Insbesondere sollen höhere Flexibilität hinsichtlich Funktionsänderungen und Funktionserweiterungen und eine erhöhte Sicherheit hinsichtlich korrekter Datenübertragung erreicht werden.

Zu diesem Zweck macht die Erfindung ein Verfahren gemäß Anspruch 1 und eine Schaltungsanordnung gemäß Anspruch 12 verfügbar, die gemäß den Ansprüchen 2 bis 11 bzw. 13 bis 31 vorteilhaft weitergebildet werden können. Außerdem wird ein Prüfbitgenerator gemäß Anspruch 32 geschaffen und kann entsprechend den Ansprüchen 33 und 34 weitergebildet werden, der sowohl für das Verfahren als auch für die Schaltungsanordnung nach vorausgeehenden Ansprüchen als auch als solcher Bedeutung hat.

Das erfindungsgemäße Verfahren liefert ein Bus-Protokoll zur selektiven digitalen Übertragung von Bitfolgen zwischen einer übergeordneten Einrichtung und mehreren selektiv ansteuerbaren untergeordneten Einrichtungen über eine dazwischen befindliche Schnittstelleneinrichtung, wobei Bitfolgen vorbestimmter maximaler Rahmenlänge mit einem die jeweils anzusteuernde untergeordnete Einrichtung adressierenden Adressenfeld, mit einem Steuerinformation enthaltenden Steuerfeld und mit einem Datenfeld verwendet werden. Während das Adressenfeld und das Steuerfeld je eine vorbestimmte Feldlänge bzw. Bitzahl aufweisen, kann das Datenfeld für die untergeordnete Einrichtung unterschiedliche Feldlängen oder Datenbitzahlen aufweisen, solange das Datenfeld eine (frei wählbare) maximale Datenbitzahl nicht übersteigt. Die seriell übertragenen Bitfolgen werden der Reihe nach in aufeinanderfolgende Registerstufen eines Schnittstellenregisters geschrieben und zur übergeordneten Einrichtung rückgelesen. Das Rücklesen erfolgt Registerstufe für Registerstufe unmittelbar nach dem Einschreiben in die jeweilige Registerstufe, wobei das Einschreiben in eine Registerstufe und das Rücklesen aus dieser Registerstufe während desselben Taktimpulses passieren. Die übergeordnete Einrichtung vergleicht das aus der jeweiligen Registerstufe rückgelesene Bit mit dem für diese Registerstufe gesendeten Bit. Wenn der rückgelesene Speicherinhalt irgendeiner der Registerstufen mit dem von der übergeordneten Einrichtung für diese Registerstufe gesendeten Bit nicht übereinstimmt, sperrt die übergeordnete Einrichtung die Übertragung der jeweils gesendeten Bitfolge an die jeweils adressierte untergeordnete Einrichtung.

Durch dieses Verfahren wird sichergestellt, daß ein in das Schnittstellenregister inkorrekt eingelesenes Bit sofort als inkorrekt erkannt wird und daß Taktfehler, beispielsweise das Ausbleiben eines oder mehrerer Taktimpulse, erkannt werden. Im Fall einer korrupten Bitfolge wird diese nicht erst zur adressierten untergeordneten Einrichtung übertragen, weil die Korrumpierung erst bei einer Überprüfung nach dem Aussenden der gesamten Bitfolge auffällt, sondern die Übertragung an die adressierte untergeordnete Einrichtung wird gar nicht erst freigegeben, wenn die bitweise ablaufende Überprüfung einen Fehler in der jeweils in das Schnittstellenregister eingelesenen Bitstelle feststellt.

Erfindungsgemäß wird jeder der einzelnen Funktionen eine eigene untergeordnete Einrichtung zugeordnet. Die einzelnen untergeordneten Einrichtungen können separat adressiert werden und können mit verschiedenen Datenfeldlängen arbeiten.

Die Datenfeldlänge, die einer bestimmten untergeordneten Einrichtung zugeordnet ist, kann in dem Adressenkode für diese untergeordnete Einrichtung untergebracht werden. Aus der jeweiligen Adresse ist dann für die übergeordnete Einrichtung erkennbar, wie groß die Datenfeldlänge der adressierten untergeordneten Einrichtung ist und wann ein Bitfolge-Ende-Signal gesetzt werden kann. Kommen neue untergeordnete Einrichtungen hinzu, verschlüsselt man deren Datenfeldlänge in deren Adresse. Daher kann man problemlos neue untergeordnete Einrichtungen mit beliebigen Datenfeldlängen hinzufügen, solange diese Datenfeldlängen unter der für das gesamte System eingerichteten maximalen Datenfeldlänge liegen. Möchte man besonders flexibel bleiben, kann man die maximale Datenfeldlänge hoch ansetzen, um später noch untergeordnete Einrichtungen mit hohem Datenfeldlängenbedarf zufügen zu können. Hierzu bedarf es keiner hardwaremäßigen Änderung hinsichtlich der übergeordneten Einrichtung, der Schnittstellen oder der Ablaufsteuerung.

Besonders einfach ist die Datenfeldlängenkodierung innerhalb der Adressen, wenn man den einzelnen Adressen Plätze innerhalb einer vorbestimmten Adressenreihenfolge in einem Adressenregister zuordnet, wobei der Stelle einer bestimmten Adresse innerhalb der Adressenreihenfolge eine bestimmte Datenfeldlänge zugeordnet ist.

Bei einer bevorzugten Ausführungsform der Erfindung hat das Steuerfeld der zu übertragenden Bitlänge die Länge nur eines Bits. Das Steuerbit einer von der übergeordneten Einrichtung ausgesendeten Bitfolge gibt Auskunft darüber, ob ein Schreib- oder ein Lesevorgang durchgeführt werden soll. Wird während eines Vorgangs, während welchem Datenbits von der übergeordneten Einrichtung zu einer untergeordneten Einrichtung übertragen werden sollen, mit Hilfe des unmittelbaren Rücklesens der in die einzelnen Registerstufen des Schnittstellenregisters geschriebenen Bits ein Fehler festgestellt, wird das Steuerbit aus der von der übergeordneten Einrichtung gesendeten Bitfolge dazu verwendet, das Einlesen der in das Schnittstellenregister geschriebenen Bitfolge in die adressierte untergeordnete Einrichtung zu sperren.

In den von den untergeordneten Einrichtungen zur übergeordneten Einrichtung übertragenen Bitfolgen kann das Steuerbit dazu verwendet werden, der übergeordneten Einrichtung Statusinformation zu liefern. Diese kann die Information geben, ob sich der Dateninhalt der jeweils adressierten untergeordneten Einrichtung seit dem letzten Schreibund/oder Lesevorgang für diese untergeordnete Einrichtung geändert hat, sei es aufgrund einer Datenverfälschung oder aufgrund neu vorliegender Daten, beispielsweise weil es sich bei der untergeordneten Einrichtung um eine Sensor- oder Meßeinrichtung handelt.

Bei einer besonders bevorzugten Ausführungsform der Erfindung wird das Steuerbit (gegebenenfalls alle Steuerbits) bei einer von der übergeordneten Einrichtung gesendeten Bitfolge ausgesondert und werden nur das Adressenfeld und das Datenfeld an die untergeordneten Einrichtungen weitergeleitet. Die aus dem Steuerbit gewonnene Steuerinformation wird über gesonderte Signalleitungen zu den untergeordneten Einrichtungen geschickt. Im Fall der Übertragung einer Bitfolge von einer untergeordneten Einrichtung an die übergeordnete Einrichtung wird in diese Bitfolge ein (oder mehrere) Steuerbit, beispielsweise in Form des erwähnten Statusbits, eingefügt, bevor die Bitfolge zur übergeordneten Einrichtung gelangt.

Zur Erzeugung eines Statusbits für die übergeordnete Einrichtung sieht eine Ausführungsform der Erfindung eine Prüfbiterzeugung vor, bei welcher aus einer zwischen der übergeordneten Einrichtung und einer untergeordneten Einrichtung übertragenen Bitfolge ein Prüfbit erzeugt und gespeichert wird. Bei der nächsten Übertragung einer Bitfolge zwischen der übergeordneten Einrichtung und derselben untergeordneten Einrichtung wird wieder ein Prüfbit erzeugt und mit dem zuvor gespeicherten Prüfbit verglichen. Aus diesem Vergleich wird ein Statusbit erzeugt, mittels welchem der übergeordneten Einrichtung mitgeteilt wird, ob sich der Dateninhalt der betroffenen untergeordneten Einrichtung seit der vorausgehenden Übertragung einer Bitfolge zwischen beiden geändert hat oder nicht.

Vorteilhafterweise erfolgt die Prüfbitspeicherung in einem Prüfbitregister innerhalb der jeweiligen untergeordneten Einrichtung.

Eine erfindungsgemäBe Schaltungsanordnung besitzt ein Schnittstellenregister und eine zwischen der übergeordneten Einrichtung und dem Schnittstellenregister angeordnete Umsetzeinrichtung. Diese kann eine Ablaufsteuereinrichtung und einen Multiplexer umfassen. Mittels der Ablaufsteuereinrichtung gewonnene Steuersignale können einerseits dazu verwendet werden, die Steuerbits aus der jeweiligen Bitfolge zu entnehmen bzw. in diese einzufügen, und können andererseits dazu verwendet werden, das bitweise Einschreiben der von der übergeordneten Einrichtung erhaltenen seriellen Bitfolge in die einzelnen Registerstufen des Schnittstellenregisters sowie das Rücklesen der Speicherinhalte der einzelnen Registerstufen des Schnittstellenregisters in die übergeordnete Einrichtung zu steuern. Zwischen die Umsetzeinrichtung, das Schnittstellenregister und die untergeordneten Einrichtungen kann eine Weiche geschaltet sein, die in Abhängigkeit von der von der übergeordneten Einrichtung erhaltenen Schreib/Lese-Information entweder die in das Schnittstellenregister geschriebene Bitfolge sowohl zurück zur übergeordneten Einrichtung als auch zu den untergeordneten Einrichtungen leitet oder die aus einer adressierten untergeordneten Einrichtung gelesene Bitfolge zur übergeordneten Einrichtung leitet.

Zur Prüfbiterzeugung wird bevorzugtermaßen eine Reihenschaltung aus mehreren XOR-Gliedern verwendet. Dem ersten XOR-Glied dieser Reihenschaltung werden das erste und das zweite Bit der zu prüfenden Bitfolge zugeführt. Den weiteren XOR-Gliedern werden ein weiteres Bit der Bitfolge und ein Ausgangssignal des je vorausgehenden XOR-Gliedes zugeführt. Am Ausgang des letzten XOR-Gliedes steht das Prüfbit zur Verfügung.

Bei einer Weiterbildung dieses Prüfbitgenerators ist dem letzten XOR-Glied dieser Reihenschaltung ein weiteres XOR-Glied nachgeschaltet, dem einerseits das jeweilige aktuelle Prüfbit und andererseits das gespeicherte vorausgehende Prüfbit zugeführt wird und an dessen Ausgang ein Informationssignal abnehmbar ist, das Auskunft darüber gibt, ob sich zwischen den Zeitpunkten von vorausgehender Prüfbiterzeugung und aktueller Prüfbiterzeugung die jeweils überprüfte Bitfolge geändert hat. Das Ausgangssignal des weiteren XOR-Gliedes kann somit als Statussignal verwendet werden, das als Steuerbit in eine zur übergeordneten Einrichtung zu übertragende Bitfolge eingefügt werden kann.

Diese Art Prüfbitgenerator hat Bedeutung sowohl im Zusammenhang mit dem erfindungsgemäßen Protokoll in Form des erfindungsgemäßen Verfahrens und der erfindungsgemäßen Schaltungsanordnung als auch unabhängig davon. Einen derartigen Prüfbitgenerator kann man unabhängig von dem erfindungsgemäßen Protokoll überall dort einsetzen, wo für Bitfolgen ein Prüfbit erzeugt werden soll, möglicherweise unter zusätzlicher Erzeugung eines Änderungsinformationssignals.

Die Erfindung sowie weitere Aufgaben, Aspekte und Vorteile der Erfindung und von Ausführungsformen der Erfindung werden nun anhand von Ausführungsbeispielen näher erläutert. In den Zeichnungen zeigen:
- Fig. 1: eine Ablaufdarstellung eines erfindungsgemäßen Protokolls;
- Fig. 2: eine Ausführungsform einer erfindungsgemäßen Schaltungsanordnung in Blockdarstellung;
- Fig. 3: eine Ablaufsteuereinrichtung der in Fig. 2 gezeigten Schaltungsanordnung;
- Fig. 4: einen Multiplexer der in Fig. 2 gezeigten Schaltungsanordnung;
- Fig. 5: eine Schalterstufe des in Fig. 4 gezeigten Multiplexers;
- Fig. 6: eine Umschalteinrichtung des in Fig. 4 gezeigten Multiplexers;
- Fig. 7: ein Schnittstellenregister der in Fig. 2 gezeigten Schaltungsanordnung;
- Fig. 8: eine Weiche in Darstellung mit Symbolen für elektronische Schalter;
- Fig. 9: einen Prüfbitgenerator der in Fig. 2 gezeigten Schaltungsanordnung;
- Fig. 10: eine untergeordnete Einrichtung der in Fig. 2 gezeigten Schaltungsanordnung;
- Fig. 11: ein Blockschaltbild einer seriellen Schnittstelle und mehrerer Funktionsblöcke bei erfindungsgemäßer Ausgestaltung;
- Fig. 12: eine serielle Schnittstelle und einen einzigen Multifunktionsblock bei Ausgestaltung nach dem SPI-Protokoll; und
- Fig. 13: die Darstellung eines bekannten SPI-Protokolls.

Fig. 12 zeigt eine für das herkömmliche SPI-Protokoll geeignete Schaltungsanordnung mit einem Microcontroller µC, einer seriellen Schnittstelle SI und einem Multifunktionsblock MFB, wobei die serielle Schnittstelle SI und der Multifunktionsblock MFB über einen Datenbus DB mit einer Datenfeldlänge von 30 Bit miteinander verbunden sind. Über den Multifunktionsblock MFB werden verschiedene Funktionen FB1 bis FB6 gesteuert.

Über den Datenbus DB werden die in Fig. 13 (mit anderer Bitzahl) gezeigten Bitfolgen übertragen, und zwar von der seriellen Schnittstelle SI zum Multifunktionsblock MFB oder umgekehrt. Die serielle Schnittstelle SI empfängt über einen seriellen Eingang Sin eine serielle Bitstelle beispielsweise von einem Microcontroller und sendet über einen seriellen Ausgang Sout Bitfolgen an den Microcontroller. Der Multifunktionsblock MFB ist außerdem an eine Select-Leitung SL angeschlossen, über welche das Slave-Select-Signal SS der Fig. 13 zugeführt wird, wenn der dargestellte Multifunktionsblock MFB zum Datenaustausch mit der seriellen Schnittstelle SI und damit mit dem Microcontroller ausgewählt ist.

Mit der Datenbitfolge gemäß Fig. 13 werden an den Multifunktionsblock MFB bei jedem Schreibvorgang sämtliche Steuer- oder Funktionsdaten, die sich in den einzelnen Bitstellen der Datenbitfolge befinden, übertragen. Bei einer Umprogrammierung beispielsweise nur einer der Teilfunktionen des Multifunktionsblocks muß eine Umprogrammierung des gesamten Datenfeldes erfolgen, also auch hinsichtlich Funktionen, die nicht geändert werden sollen. Dies bringt das Risiko mit sich, daß bei einer solchen Umprogrammierung Programmierungsfehler hinsichtlich nicht zu ändernder Funktionen eingebracht werden.

Da nach dem SPI-Protokoll in die übergeordnete Einrichtung, bei dem betrachteten Beispiel in den Microcontroller, Datenbitfolgen oder Datenwörter erst zu dem Zeitpunkt rückgelesen werden, zu welchem der Microcontroller ein neues Datenwort sendet, kann dieses Rücklesen nicht zur Feststellung verwendet werden, ob bei der vorausgehenden Datenwortübertragung ein oder mehrere Datenbits korrupt waren. Das Korruptwerden von Datenbits bei der Übertragung kann somit nicht festgestellt werden. Das nach dem SPI-Protokoll vorgesehene Abbrechen einer Datenwortübertragung findet statt, wenn einem anderen Arbeitsvorgang als der gerade laufenden Datenübertragung eine höhere Priorität eingeräumt und die laufende Datenübertragung deshalb abgebrochen wird. Der Abbruch oder die Verhinderung einer Datenwortübertragung wegen des Feststellens von korruptgewordenen Daten findet nicht statt.

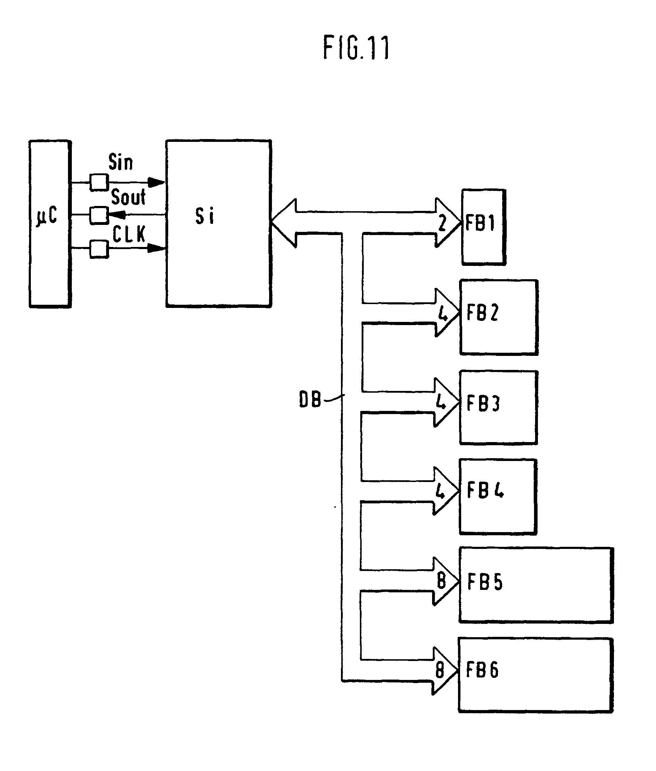

Die Erfindung geht einen anderen Weg. Wie Fig. 11 zeigt, ist bei dem erfindungsgemäßen Konzept anstelle des einzigen Multifunktionsblockes MFB in Fig. 12 eine Anzahl von einzelnen, separaten Funktionsblöcken FB1 bis FB6 vorgesehen, die alle über den Datenbus DB mit der seriellen Schnittstelle SI verbunden sind. In den zu den Funktionsblöcken FB1 bis FB6 weisenden Pfeilspitzen des Datenbusses DB sind Zahlen angegeben, welche die Datenfeldlänge angeben, welche von dem jeweiligen Funktionsblock für die Ausübung seiner Funktion benötigt wird. Man sieht also, daß eine Bitfolge, die von der übergeordneten Einrichtung zu einem Funktionsblock geschickt wird, eine Datenfeldlänge von 2 Datenbits benötigt, wenn der Funktionsblock FB1 adressiert ist, eine Datenfeldlänge von 4 Datenbits benötigt, wenn einer der Funktionsblöcke FB2 bis FB4 adressiert ist, und eine Datenfeldlänge von 8 Datenbits braucht, wenn Funktionsblock FB5 oder FB6 adressiert ist.

Wird von der übergeordneten Einrichtung eine Bitfolge abgeschickt, gelangen deren Adressenfeld und deren Datenfeld an alle Funktionsblöcke FB1 bis FB6. Der adressierte Funktionsblock erkennt, daß er gemeint ist, und übernimmt das Datenfeld der gesendeten Bitfolge in ein Datenfeldregister. Anhand der Adresse weiß die übergeordnete Einrichtung, wie groß die Datenfeldlänge des jeweils adressierten Funktionsblockes ist. Von den Rahmenanfangs- und Rahmenende-Signalen, welche die übergeordnete Einrichtung bei Beginn und beim Ende einer abgesendeten seriellen Bitfolge liefert, wird das Rahmenende-Signal in Abhängigkeit von dem jeweils adressierten Funktionsblock variabel gesetzt, wenn nämlich die Datenbitzahl gesendet ist, die der Datenfeldlänge des adressierten Funktionsblockes entspricht.

In den Fig. 11 und 12 sind je zwischen dem Microcontroller und der seriellen Schnittstelle SI Schnittstellenanschlüsse gezeigt, wobei Sin einen Anschluß für eine eingehende serielle Bitfolge, Sout einen Anschluß für eine ausgehende serielle Bitfolge und CLK ein Anschluß für einen Takt ist.

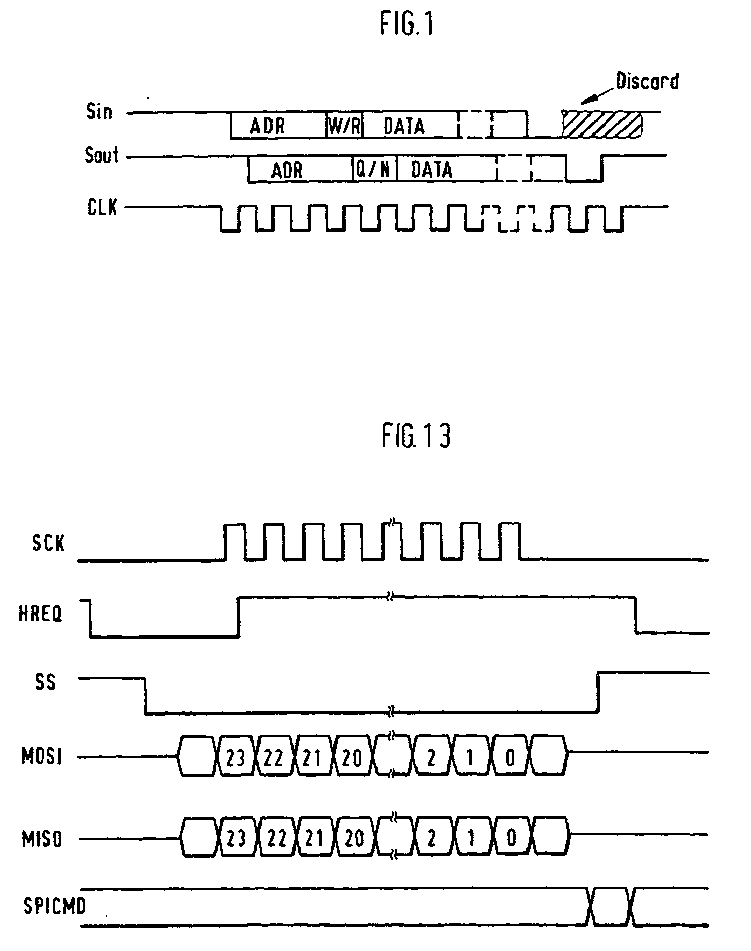

Ein Beispiel eines Protokolls zur Durchführung des erfindungsgemäßen Verfahrens ist in Fig. 1 gezeigt. Die drei dargestellten Signale sind je mit der Bezeichnung desjenigen Schnittstellenanschlusses versehen, dem sie zugeführt werden bzw. von dem sie abgenommen werden.

Wird von der übergeordneten Einrichtung, wobei im folgenden der Einfachheit halber von einem Microcontroller gesprochen wird, eine serielle Bitfolge geliefert, wird diese (in Fig. 1 nach links) der Reihe nach unter Steuerung des Taktes CLK Bit für Bit in ein Schnittstellenregister der seriellen Schnittstelle SI gelesen. Bei der in Fig. 1 gezeigten Darstellung wird davon ausgegangen, daß das bitweise Einlesen jeweils bei der ansteigenden Flanke des je zugehörigen Taktimpulses vorgenommen wird. Unmittelbar nach dem Einschreiben eines Bits, nämlich noch innerhalb desselben Taktimpulses, erfolgt das Rücklesen des Speicherinhaltes, der zu diesem Bit gehört und während dieses Taktes gerade in das Schnittstellenregister geschrieben worden ist, in den Microcontroller. Dort wird anhand der Bitstelle des jeweils in das Schnittstellenregister geschriebenen Bits bewertet, ob das für diese Bitstelle rückgelesene Bit mit dem zur seriellen Schnittstelle SI gelieferten Bit übereinstimmt. Ist dies der Fall, kann davon ausgegangen werden, daß das jeweils bewertete Bit korrekt an das Schnittstellenregister übertragen und in dieses geschrieben worden ist. Besteht keine Übereinstimmung zwischen dem für die betrachtete Bitstelle gesendeten Bit und dem für diese Bitstelle rückgelesenen Bit, wird davon ausgegangen, daß das betreffende Bit korrupt ist, nämlich entweder inkorrekt beim Schnittstellenregister angekommen oder inkorrekt im Schnittstellenregister gespeichert worden ist.

Sind alle Bits der jeweiligen Bitfolge in das Schnittstellenregister eingelesen worden, wird von dem Microcontroller das Rahmenende-Signal geliefert. Im Anschluß an das Rahmenende-Signal ist ein sogenanntes Discard-Bit vorgesehen. Dieses weist beispielsweise einen Logikwert L auf, wenn die rückgelesene Bitfolge mit der an das Schnittstellenregister geschickten Bitfolge übereinstimmt. Das Discard-Bit weist dagegen einen Logikwert H auf, wenn mit Hilfe des Rücklesens festgestellt worden ist, daß mindestens ein korruptes Bit vorliegt.

Wie Fig. 1 zeigt, enthält die serielle Bitfolge zunächst ein Adressenfeld mit einer vorbestimmten Anzahl, beispielsweise drei, Adressenbits, darauf folgend ein Steuerfeld mit vorzugsweise nur einem Steuerbit und diesem folgend ein Datenfeld mit einer von dem adressierten Funktionsblock (der adressierten untergeordneten Einheit) abhängenden Datenbitzahl. Der Rahmenbeginn einer Bitfolge wird durch die fallende Flanke des ersten Adressenbits signalisiert, während das Rahmenende der jeweiligen Bitfolge durch die fallende Flanke des letzten Datenbits angezeigt wird. Nach dem letzten Datenbit wird ein Übergang von "0" nach "1" oder von L nach H als Rahmenende-Signal gesetzt. Wird nach dem letzten Datenbit in den Microcontroller kein entsprechender Übergang rückgelesen, geht der Microcontroller davon aus, daß eine inkorrekte Bitfolgenübertragung an das Schnittstellenregister stattgefunden hat.

Im Steuerfeld der zur seriellen Schnittstelle gelieferten Bitfolge befindet sich ein Schreib/Lese-Steuersignal W/R, mit welchem dem jeweils adressierten Funktionsblock mitgeteilt wird, ob er in den Schreibbetrieb gesetzt werden soll, um ihn neue Daten übernehmen zu lassen, oder ob er in den Lesebetrieb gesetzt werden soll, um seinen Dateninhalt an den Microcontroller übertragen zu können.

Das Schreib/Lese-Steuersignal W/R wird der von dem Microcontroller gesendeten Bitfolge entnommen, bevor diese in das Schnittstellenregister geschrieben wird. Das entsprechende Steuerbit wird aber erst während der Zeitlage des Discard-Bits an die Funktionsblöcke geliefert. Ist das Steuerbit ein Schreibbefehl, wird dieser während der Zeitlage des Discard-Bit nur dann an die Funktionsblöcke geliefert, wenn durch den Rücklesevorgang im Microcontroller festgestellt worden ist, daß eine korrekte Datenübertragung an die serielle Schnittstelle stattgefunden hat. Ist dagegen während des Rücklesens mindestens ein korruptes Bit festgestellt worden, wird die Abgabe eines Schreibsteuersignals während der Zeitlage des Discard-Bits unterdrückt, so daß ein Einschreiben einer korrupten Bitfolge in den jeweils adressierten Funktionsblock verhindert wird. Gleichermaßen wird verfahren, wenn nach dem Ende des letzten Datenbits kein Übergang von L nach H festgestellt worden ist, weil in diesem Fall davon auszugehen ist, daß eine inkorrekte Bitfolgenübertragung stattgefunden hat, beispielsweise aufgrund fehlerhafter Taktimpulse am Ort des Schnittstellenregisters oder aufgrund fehlerhafter Nutzung der am Schnittstellenregister korrekt angekommenen Taktimpulse.

Da immer von dem Microcontroller bestimmt wird, ob die jeweilige Bitfolge in einen Funktionsblock geschrieben oder aus einem Funktionsblock ausgelesen werden soll, braucht die auf dem Auslesen eines Funktionsblocks beruhende, zum Microcontroller geschickte Bitfolge kein Steuerbit zu enthalten, welches einen Steuerbefehl hinsichtlich Lesen oder Schreiben enthält. Solche der Übertragung von einem Funktionsblock zum Microcontroller dienenden Bitfolgen werden auf ihrem Weg zum Microcontroller in ihrem Steuerbitfeld mit einem andersartigen Steuerbit versehen. Vorzugsweise handelt es sich dabei um ein Statusbit, welches dem Microcontroller anzeigt, ob sich der Dateninhalt eines Funktionsblockes seit dem letzten Schreib- oder Lese-Zugriff zu diesem Funktionsblock geändert hat, sei es aufgrund von Störungen oder sei es aufgrund von Übernahme neuer Daten in den Funktionsblock, beispielsweise wenn dieser ein Meß- oder Sensorfunktionsblock ist. Der Microcontroller kann dann entsprechend auf das Statussignal reagieren.

In Fig. 1 sind die beiden Rahmen für die serielle Bitfolge, die in das Schnittstellenregister geschrieben wird (Sin), und der Rahmen der Bitfolge, die in den Microcontroller rückgelesen wird (Sout), etwas zeitlich versetzt. Der Grund hierfür ist, daß die einzelnen Registerstufen, aus denen das Schnittstellenregister besteht und bei denen es sich vorzugsweise je um ein Flipflop handelt, eine bestimmte Verzögerungszeit aufweisen zwischen dem Zeitpunkt, zu welchem der Vorgang des Einschreibens eines Bits beginnt, und dem Zeitpunkt, zu welchem dieses Bit gespeichert und aus dieser Registerstufe wieder auslesbar ist.

Das erfindungsgemäße Protokoll erlaubt hohe Flexibilität. Da für die einzelnen Funktionsblöcke unterschiedliche Datenfeldlängen möglich sind, kann auch die Rahmenlänge der jeweils übertragenen Bitfolgen entsprechend variabel sein, so daß beispielsweise dann, wenn häufig Bitfolgen an Funktionsblöcke mit kurzer Datenfeldlänge übertragen werden, insgesamt eine verkürzte mittlere Rahmenübertragungszeit erreicht werden kann. Aufgrund der variablen Datenfeldlänge können auch neue Funktionsblöcke hinzugenommen werden, ohne hardwaremäßige Änderungen durchführen zu müssen, solange nur die Datenfeldlänge des neu hinzugekommenen Funktionsblockes eine maximale Datenfeldlänge, die für das gesamte System gewählt worden ist, nicht übersteigt. Die Neuprogrammierung irgendeines der Funktionsblöcke kann für diesen alleine durchgeführt werden, ohne auch für alle anderen Funktionsblöcke eine Neuprogrammierung vornehmen zu müssen.

Die übergeordnete Einrichtung, zum Beispiel der Microcontroller, ist immer über die Qualität der Datenübertragung und darüber, ob sich der Dateninhalt in den Funktionsblöcken geändert hat oder nicht, informiert.

Bei bestimmten Anwendungen mag es vorteilhaft sein, den Dateninhalt mindestens eines Teils der Funktionsblöcke nach einem Datenübertragungsvorgang in einen vorbestimmten Anfangszustand rückzusetzen. Dies kann durch Übertragung eines Rücksetz-Steuerbefehls während der Zeitlage des Discard-Bits geschehen.

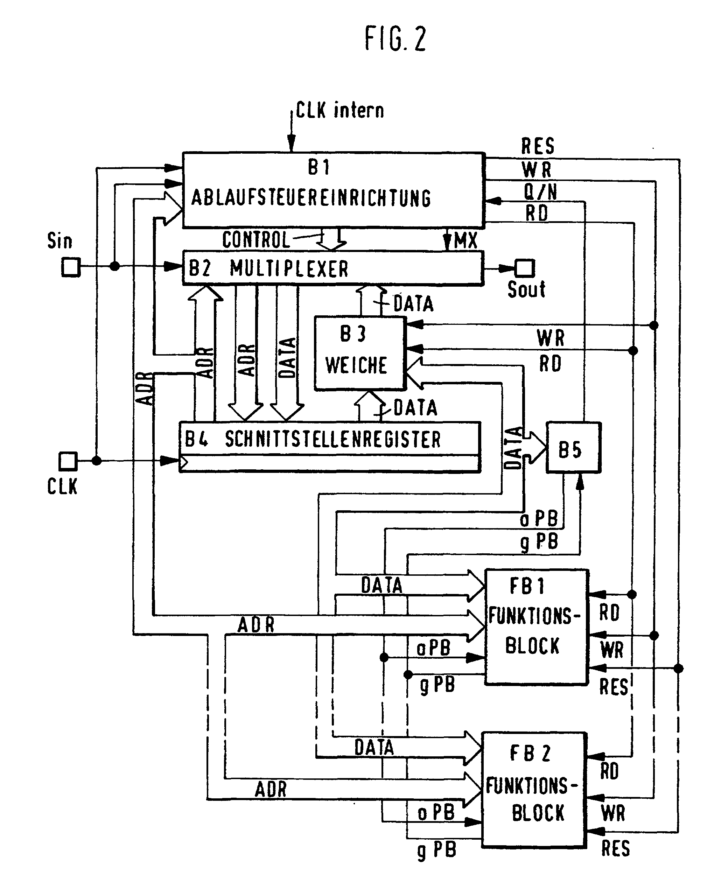

Anhand der Figuren 2 bis 11 wird nun eine bevorzugte Ausführungsform einer erfindungsgemäßen Schaltungsanordnung zur Durchführung eines erfindungsgemäßen Verfahrens betrachtet.

Fig. 2 zeigt in Blockschaltbildform eine Gesamtdarstellung einer erfindungsgemäßen Schaltungsanordnung mit einer Ablaufsteuereinrichtung B1, einem Multiplexer B2, einer Weiche B3, einem Schnittstellenregister B4, einem Prüfbitgenerator B5 und zwei Funktionsblöcken FB1 und FB2. Die Ablaufsteuereinrichtung B1, der Multiplexer B2, das Schnittstellenregister B4 und die Funktionsblöcke FB1 und FB2 sind je mit einem Adressenbus ADR verbunden. Wie die Pfeile dieses Adressenbusses zeigen, handelt es sich dabei um ein bidirektionales Bussystem. Hinsichtlich der Adressenbusverbindung zwischen dem Multiplexer B2 und dem Schnittstellenregister B4 existieren zwei voneinander getrennte Adressenbusse.

Die Ablaufsteuereinrichtung B1 und der Multiplexer B2 sind über einen Steuerbus CONTROL miteinander verbunden, und zwar in Flußrichtung von der Ablaufsteuereinrichtung B1 zum Multiplexer B2 hin.

Außerdem sind einige Datenbusse DATA vorgesehen. Dabei besteht eine Datenverbindung vom Multiplexer B2 zum Schnittstellenregister B4 direkt und vom Schnittstellenregister B4 zum Multiplexer B2 über die Weiche B3. Die Weiche ist außerdem an einen bidirektionalen Datenbus DATA angeschlossen, der die Weiche B3 mit dem Prüfbitgenerator B5 und mit den Funktionsblöcken FB1 und FB2 verbindet.

Neben den Busleitungen, die in den Figuren durch Doppelstrichpfeile gekennzeichnet sind, sind Signalleitungen vorgesehen, die durch einstrichige Pfeile gekennzeichnet sind.

Von dem seriellen Eingangsanschluß Sin der seriellen Schnittstelle SI gehen Signalleitungen zur Übertragung der von dem in Fig. 2 (nicht dargestellten) Microcontroller gelieferten seriellen Bitfolge zu der Ablaufsteuereinrichtung B1 und zum Multiplexer B2. Aus dem Multiplexer B2 führt eine Ausgangsleitung an den seriellen Ausgangsanschluß Sout zur Übertragung einer seriellen Bitfolge zum Microcontroller. Der Systemtakt CLK wird auf die Ablaufsteuereinrichtung B1 und das Schnittstellenregister B4 geführt. Von der Ablaufsteuereinrichtung B1 zu den Funktionsblöcken FB1 und FB2 führen eine Schreibsteuerleitung WR, eine Lesesteuerleitung RD und eine Rücksetzsteuerleitung RES. Von der Schreibsteuerleitung WR und der Lesesteuerleitung RD führen Abzweigungen zur Weiche B3. Vom Prüfbitgenerator B5 zu den Funktionsblöcken FB1 und FB2 führt eine Leitung zur Übertragung des jeweils aktuellen Prüfbits aPB, während von den Funktionsblöcken FB1 und FB2 zum Prüfbitgenerator B5 eine Leitung für die Übertragung eines vorausgehend gespeicherten Prüfbits gPB führt. Vom Prüfbitgenerator B5 ist eine Statussteuerleitung Q/N auf die Ablaufsteuereinrichtung B1 geführt. Außerdem wird der Ablaufsteuereinrichtung B1 ein interner Takt CLKintern zugeführt.

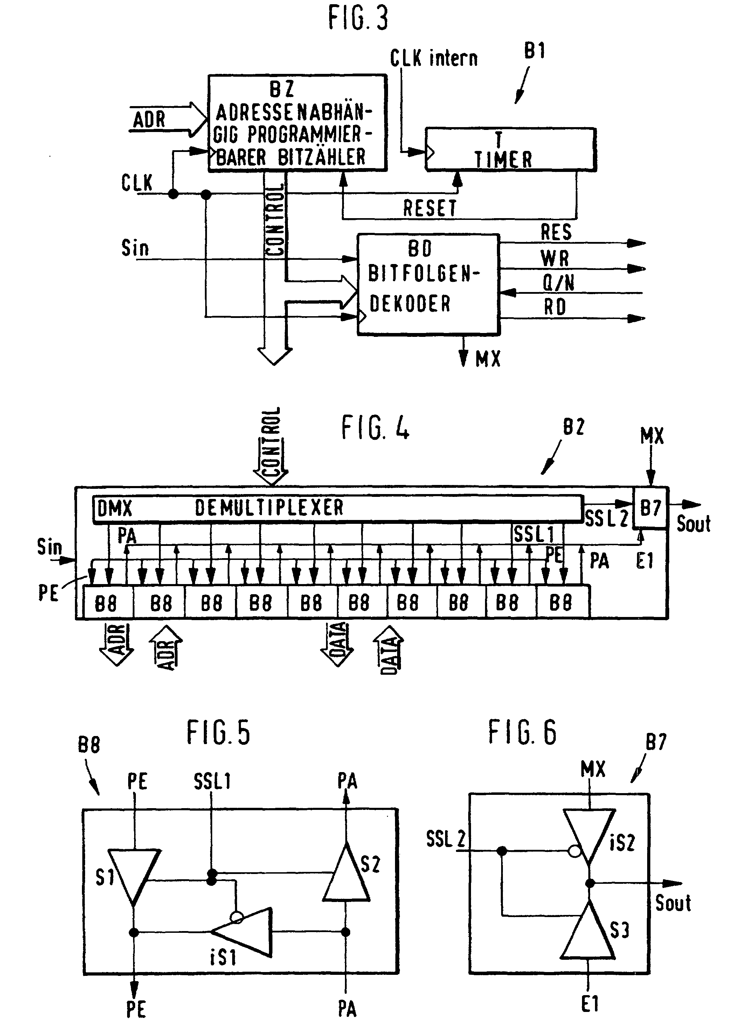

Die einzelnen Blöcke der in Fig. 2 gezeigten Schaltungsanordnung sind in den Fig. 3 bis 10 gezeigt und werden nun nacheinander hinsichtlich ihres Aufbaus und ihrer Funktionsweise erläutert.

Eine Ausführungsform einer Ablaufsteuereinrichtung B1 ist in Fig. 3 gezeigt. Diese umfaßt einen adressenabhängig programmierbaren Bitzähler BZ, einen Bitfolgendecoder BD und einen Timer T. Der Bitzähler BZ ist mit dem Steuerdatenbus CONTROL verbunden, welcher vom Bitzähler BZ erzeugte Steuerdaten zum Bitfolgendecoder BD liefert. Außerdem ist der Bitzähler BZ mit dem Adressenbus ADR verbunden. Der Systemtakt CLK wird dem Bitzähler BZ, dem Timer T und dem Bitfolgendecoder BD zugeführt. Der Bitfolgendecoder BD ist außerdem mit dem Anschluß Sin für die vom Microcontroller gelieferten Bitfolgen verbunden. Der Bitfolgendecoder BD ist des weiteren mit den wegführenden Steuerleitungen RES, WR und RD und mit der zuführenden Steuerleitung Q/N verbunden. Außerdem besitzt der Bitfolgendecoder BD eine Ausgangsleitung MX. Dem Timer T wird über die Leitung CLKintern ein interner Takt zugeführt. Eine Ausgangsleitung RESET des Timers ist auf einen Rücksetzeingang des Bitzählers BZ geführt.

Unter Steuerung der Adresse des jeweils adressierten Funktionsblocks FB1 oder FB2 (wobei bei praktischen Ausführungsformen mehr Funktionsblöcke vorhanden sein können) wird der Bitzähler BZ adressenabhängig programmiert. Durch diese Programmierung wird dem Bitzähler BZ die Gesamtbitzahl der an den adressierten Funktionsblock zu sendenden Bitfolge mitgeteilt. Dadurch "weiß" der Bitzähler BZ, zu welchen von ihm gezählten Taktimpulsen das Adressenfeld, das Steuerfeld und das Datenfeld gehören und zu welcher Taktzeitlage das Discard-Bit fällig ist. Mit dieser "Kenntnis" erzeugt der Bitzähler BZ Steuerdaten für den Bitfolgendecoder BD. Anhand dieser Steuerinformation ermittelt der Bitfolgendecoder BD, an welcher Bitstelle der über Sin eingegangenen Bitfolge das Steuerbit auftritt, das je nach Bedeutungsinhalt des Steuerbits zur Abgabe eines Schreibsteuersignals WR oder eines Lesesteuersignals RD während der Zeitlage des Discard-Bits führt. Mit dem "Wissen", wann das Steuerbit fällig ist, kann der Bitfolgendecoder BD während der Zeitlage des Steuerbits einer Bitfolge, die von einem Funktionsblock zum Microcontroller zu leiten ist, ein Steuerbit in Form des Statussignals Q/N einfügen, was mit Hilfe eines Steuersignals am Ausgang MX des Bitfolgendecoders BD bewerkstelligt wird.

Mit Hilfe des Timers T wird überwacht, ob Systemtaktimpulse über den Anschluß CLK eingehen. Zu diesem Zweck werden dem Timer T die internen Taktimpulse über die Leitung CLKintern zugeführt. Bleibt ein über CLK zugeführter Systemtakt für eine bestimmte Zeitdauer von beispielsweise 1 ms aus, gibt der Timer T ein Rücksetzsignal über die Rücksetzleitung RESET an den Bitzähler BZ, um diesen in seinen Anfangszustand zurückzustellen. Mit Hilfe des Timers T kann also festgestellt werden, wenn Taktfehler auftreten oder das gesamte System durch Einstellen der Systemtaktimpulse in einen Ruhezustand versetzt wird.

Der in Fig. 4 gezeigte Multiplexer B2 umfaßt einen Demultiplexer DMX, eine Umschalteinrichtung B7 und eine Reihe von Schalterstufen B8. Ausführungsformen einer Schalterstufe B8 und einer Umschalteinrichtung B7 sind in den Fig. 5 bzw. 6 gezeigt.

Die in den Fig. 5 und 6 gezeigten Dreiecke sind Symbole für elektronische Schalter. Dabei sind die beiden Leitungen, die zur Spitze und zu einer der Spitze gegenüberliegenden Dreiecksseite führen, die mittels des elektronischen Schalters zu verbindenden oder voneinander zu trennenden Signalleitungen, während die je zu einer weiteren Dreiecksseite führende Leitung eine Schaltsteuerleitung ist.

Die in Fig. 5 gezeigte Schaltereinrichtung besitzt einen ersten Schalter S1, einen zweiten Schalter S2 und einen ersten Inversschalter IS1. Die Schalter S1 und S2 werden in einen leitenden Zustand geschaltet, wenn einer Schaltsteuerleitung SSL1 ein Logikwert H oder "1" zugeführt wird. Der Inversschalter IS1 gelangt in den leitenden Zustand, wenn über die Steuerleitung SSL1 ein Logikwert L oder "0" zugeführt wird.

Entsprechendes gilt für einen zweiten Inversschalter IS2 und einen dritten Schalter S3 der in Fig. 6 gezeigten Umschalteinrichtung B7. Auch hier gilt wieder, daß der dritte Schalter S3 in einen leitenden und der zweite Inversschalter IS2 in einen nicht-leitenden Zustand gelangen, wenn über eine Steuerleitung SSL2 ein Logikwert H oder "1" zugeführt wird, daß dagegen S3 sperrt und IS2 leitet, wenn über SSL2 ein Logikwert L oder "0" zugeführt wird.

Dem Multiplexer B2 wird über einen Serielleingang Sin die von dem Microcontroller gesendete Bitfolge zugeführt und über einen Seriellausgang Sout gibt der Multiplexer B2 eine an den Microcontroller zu liefernde Bitfolge ab.

Die Schalterstufenreihe des Multiplexers B2 weist eine Anzahl Schalterstufen B8 auf, die gleich der Summe aus der Adressenbitzahl und der maximalen Datenbitzahl ist. Jede Schalterstufe B8 besitzt einen über den ersten Schalter S1 geführten Paralleleingang PE und einen über den zweiten Schalter S2 geführten Parallelausgang PA. Die Paralleleingänge PE der Schalterstufen B8 sind alle mit dem Serielleingang Sin verbunden. Die Parallelausgänge PA der Schalterstufen B8 sind alle mit einer Verbindungsleitung VL verbunden, die zu einem ersten Eingang E1 der Umschalteinrichtung B7 führt. Die Steuerleitungen SSL1 sind mit je einem zugehörigen Steuerausgang des Demultiplexers DMX verbunden. Die Schaltsteuerleitung SSL2 ist mit einem weiteren Steuerausgang des Demultiplexers DMX verbunden.

Die Umschalteinrichtung B7 ist über einen zweiten Eingang mit der Ausgangsleitung MX des Bitfolgendecoders BD verbunden.

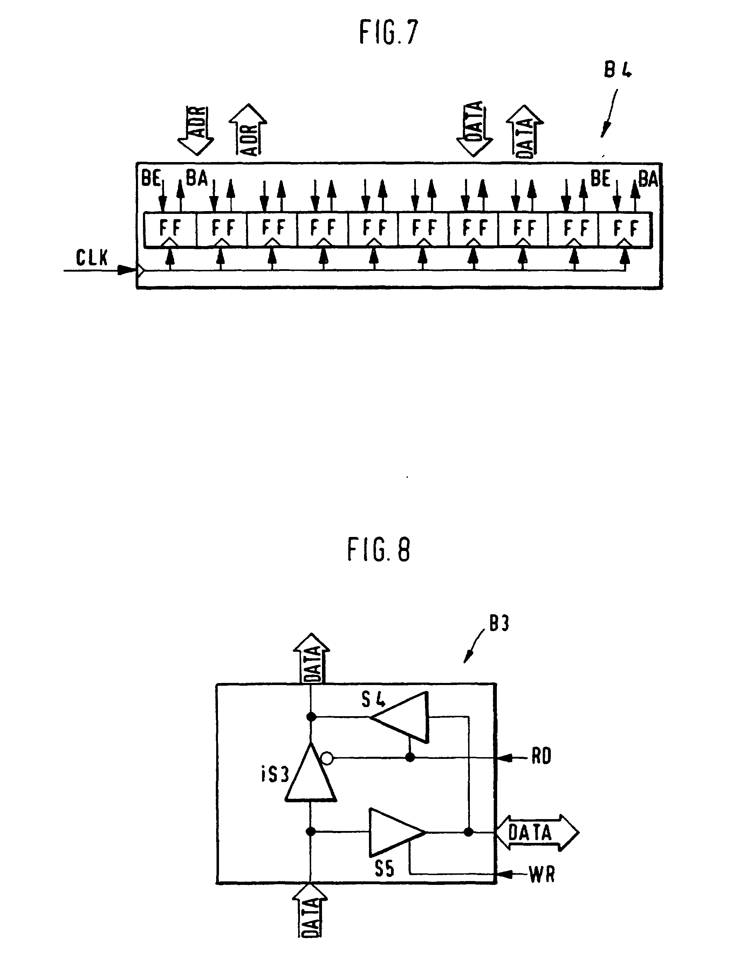

Eine Ausführungsform eines Schnittstellenregisters B4 ist in Fig. 7 gezeigt. Dieses umfaßt eine Reihe von Registerstufen FF, deren Anzahl mit der Zahl der Schalterstufen B8 übereinstimmt, also mit der Summe aus der Adressenbitzahl und der Datenbitzahl. Das Schnittstellenregister B4 wird mit dem Systemtakt CLK derart beaufschlagt, daß sämtliche Registerstufen FF gleichzeitig getaktet werden. Die einzelnen Registerstufen FF sind je parallel schreib- und lesbar. Zu diesem Zweck weist jede Registerstufe FF einen Biteingang BE und einen Bitausgang BA auf, die mit dem Paralleleingang PE bzw. dem Parallelausgang PA der je zugehörigen Schalterstufe B8 verbunden sind. Die Verbindung zwischen dem Multiplexer B2 und dem Schnittstellenregister B4 mittels der Paralleleingänge PE und der Parallelausgänge PA bzw. mittels der Biteingänge BE und der Bitausgänge BA geschieht über die zwischen dem Multiplexer B2 und dem Schnittstellenregister B4 verlaufenden Adressen- und Daten-Busleitungen ADR bzw. DATA.

Der Demultiplexer B2 und das Schnittstellenregister B4 wirken folgendermaßen zusammen:

Wenn über den Serielleingang Sin des Multiplexers B2 eine serielle Bitfolge vom Microcontroller eingeht, werden die einzelnen Bits dieser Bitfolge unter Steuerung des Demultiplexers DMX in Abhängigkeit von den über den Steuerbus CONTROL gelieferten Steuerdaten taktweise der Reihe nach über je eine der Schalterstufen B8 in die einzelnen Registerstufen FF des Schnittstellenregisters B4 geschrieben. Während der selben Taktzeitlage, während welcher das Einschreiben in eine bestimmte Registerstufe FF stattfindet, wird der durch dieses Einlesen erzeugte Speicherinhalt dieser Registerstufe über dieselbe zugehörige Schalterstufe B8 ausgelesen und über die Verbindungsleitung VL und die Umschalteinrichtung B7 auf den Seriellausgang Sout des Multiplexers gegeben. Zu diesem Zweck werden die Schalter S1 und S2 der betroffenen Schalterstufe B8 je leitend und deren Inversschalter IS1 nicht leitend gesteuert, während der Schalter S3 der Umschalteinrichtung B7 leitend und deren Inversschalter IS2 nicht leitend gesteuert werden.

In allen anderen Schalterstufen B8 sind die Schalter S1 und S2 nicht leitend und der Inversschalter IS1 leitend, so daß die damit zusammenwirkenden Registerstufen FF des Schnittstellenregisters B4 ihren Speicherinhalt über den Inversschalter IS1 mit dem Systemtakt zyklisch neu einschreiben.

In Fig. 8 ist eine Ausführungsform für die Weiche B3 dargestellt, und zwar mit Schaltersymbolen für elektronische Schalter, wie sie auch schon in den Fig. 5 und 6 gezeigt sind. Die Weiche B3 besitzt einen vierten Schalter S4 und einen fünften Schalters S5 sowie einen dritten Inversschalter IS3. Über IS3 ist eine Verbindung zwischen dem vom Schnittstellenregister B4 kommenden Datenbus und dem zum Multiplexer führenden Datenbus herstellbar. Über S5 ist eine Verbindung zwischen dem vom Schnittstellenregister B4 kommenden und dem mit dem Prüfbitgenerator B5 und den Funktionsblöcken FB1 und FB2 verbindenden Datenbus herstellbar. Mittels S4 kann eine Verbindung zwischen dem mit B5, FB1 und FB2 verbindenden Datenbus und dem zu B2 führenden Datenbus hergestellt werden.

Liegt ein Schreibsteuerbefehl vor, sind die Schalter S5 und IS3 leitend und der Schalter S4 nicht leitend gesteuert. Daher werden vom Schnittstellenregister B4 kommende Daten einerseits zum Multiplexer B2 und andererseits zu dem Prüfbitgenerator B5 und den Funktionsblöcken FB1 und FB2 geleitet. Liegt ein Lesesteuerbefehl vor, sind S5 und IS3 nicht leitend und ist S4 leitend gesteuert. In diesem Schaltzustand leitet die Weiche B3 Daten auf dem mit B5, FB1 und FB2 verbindenden Datenbus zum Multiplexer B2 weiter.

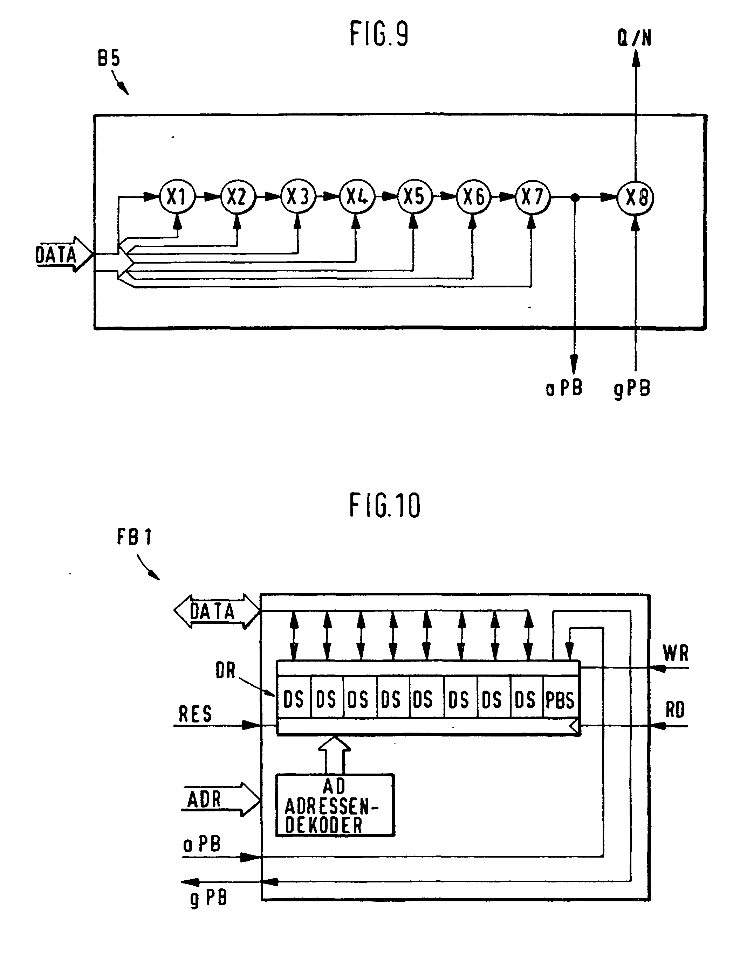

Eine in Fig. 9 gezeigte bevorzugte Ausführungsform eines Prüfbitgenerators B5 besitzt eine Reihenschaltung mit XOR-Gliedern X1 bis X8, die je zwei XOR-Eingänge und einen XOR-Ausgang aufweisen. Während den beiden XOR-Eingängen des ersten XOR-Gliedes X1 je eines der Datenbits des Datenbusses zugeführt werden, erhalten die beiden XOR-Eingänge der XOR-Glieder X2 bis X7 je ein weiteres Bit des Datenbusses und ein Ausgangssignal vom XOR-Ausgang des je vorausgehenden XOR-Gliedes. Der XOR-Ausgang von X7 liefert ein Prüfbit, das an jeden der beiden Funktionsblöcke FB1 bis FB2 geschickt wird und außerdem auf einen XOR-Eingang des weiteren XOR-Gliedes X8 gegeben wird, dem über seinen zweiten XOR-Eingang ein Prüfbit von dem Funktionsblock FB1 oder FB2 zugeführt wird. Am XOR-Ausgang von X8 ist ein Änderungsanzeige- oder Statussignal Q/N abnehmbar.

Ein XOR-Glied mit zwei Eingängen liefert bekanntlich an seinem Ausgang einen Logikwert "0", wenn beiden Eingängen der gleiche Logikwert zugeführt wird, und einen Logikwert "1", wenn den beiden Eingängen unterschiedliche Logikwerte zugeordnet werden. Ein bestimmtes Datenbitmuster auf dem Datenbus DATA führt daher zu einem ganz bestimmten Prüfbit am Ausgang des XOR-Gliedes X7. Dieses ist das jeweils aktuelle Prüfbit aPB, das in einen Prüfbitspeicher des jeweils adressierten der beiden Funktionsblöcke FB1 und FB2 geschickt wird. Mittels des weiteren XOR-Gliedes X8 wird das jeweils aktuelle Prüfbit mit dem Prüfbit gPB, das in dem Adressierten der Funktionsblöcke FB1 und FB2 jeweils vorausgehend gespeichert worden ist, verglichen. Je nach dem, ob das aktuelle Prüfbit mit dem vorausgehend gespeicherten Prüfbit übereinstimmt oder nicht, erscheint am Ausgang von X8 als Statussignal ein Logikwert "0" oder "1". Daraus kann der Microcontroller erkennen, ob sich der Dateninhalt des Adressierten der beiden Funktionsblöcke FB1 und FB2 zwischenzeitlich geändert hat oder nicht.

Eine in Fig. 10 gezeigte Ausführungsform eines Funktionsblockes, beispielsweise FB1 umfaßt ein Datenfeldregister DR und einen Adressendecoder AD. Das Datenfeldregister DR weist eine der Datenfeldbreite des jeweiligen Funktionsblockes entsprechende Anzahl Datenfeldregisterstufen DS und außerdem eine Prüfbitspeicherstufe PBS auf. Der Adressendecoder AD ist mit dem Adressenbus ADR verbunden und gibt das Datenfeldregister DR für einen Schreib- oder Lesevorgang frei, wenn mit Hilfe des Adressendecoders AD erkannt worden ist, daß über den Adressenbus ADR die Adresse seines Funktionsblocks gesendet worden ist. Unter Steuerung des Systemtaktes CLK kann dann eine Datenbitfolge parallel vom Datenbus DATA in die Datenfeldregisterstufen DS geschrieben oder aus den Datenfeldregisterstufen DS in den Datenbus DATA gelesen werden, je nach dem, ob über die Schreib- und Lesesteuerleitungen WR und RD ein Schreib- oder ein Lesesteuerbefehl an das Datenfeldregister DR gelangt ist.

Außerdem kann in die Prüfbitspeicherstelle PBS des adressierten Funktionsblocks ein aktuelles Prüfbit aPB vom Prüfbitgenerator B5 geschrieben und ein vorausgehend gespeichertes Prüfbit gPB aus der Prüfbitspeicherstelle PBS ausgelesen und zum Prüfbitgenerator B5 geliefert werden.

Über einen Rücksetzanschluß RES kann das Datenfeldregister DR nach Beendigung eines Lesevorgangs, vorzugsweise während der Zeitlage des Discard-Bits, in einen vorbestimmten Anfangszustand rückgesetzt werden.

Nachdem Aufbau und Funktion der einzelnen Schaltungsteile erläutert worden sind, wird nun noch die Gesamtfunktionsweise der in Fig. 2 gezeigten Ausführungsform einer erfindungsgemäßen Schaltungsanordnung betrachtet.

Zunächst sei angenommen, daß vom Microcontroller eine Datenbitfolge in den Funktionsblock FB1 geschrieben werden soll. Hierfür wird vom Microcontroller an den Serielleingang Sin eine Bitfolge mit Adressenfeld, Steuerfeld und Datenfeld geliefert, die sowohl auf die Ablaufsteuereinrichtung B1 als auch auf den Multiplexer B2 gelangt. Anhand des im Adressenfeld enthaltenen Adressencodes wird der adressenabhängig programmierbare Bitzähler BZ auf die gesendete Bitfolge abgestimmt. Mit Hilfe der daraus resultierenden Steuerdaten kann der Bitfolgendecoder BD dem Steuerfeld der vom Microcontroller gesendeten Bitfolge das einen Schreib- oder einen Lesebefehl darstellende Steuerbit entnehmen. Gleichzeitig wird die vom Microcontroller kommende Bitfolge über die Schalterstufen B8 des Multiplexers in die Registerstufen FF des Schnittstellenregisters B4 geschrieben. Dies geschieht unter Steuerung des Demultiplexers DMX derart, daß nur die Bits des Adressenfeldes und des Datenfeldes dieser Bitfolge in das Schnittstellenregister eingeschrieben werden, nicht jedoch das Bit des Steuerfeldes. Praktisch gleichzeitig mit dem Bit für Bit erfolgenden Einschreiben in die einzelnen Registerstufen des Schnittstellenregisters B4 erfolgt das Rücklesen von deren Speicherinhalt Bit für Bit über die Umschalteinrichtung B7 zu dem zum Microcontroller führenden Seriellausgang Sout des Multiplexer B2. Mit Hilfe der Umschalteinrichtung B7 wird während der Zeitlage des Steuerfeldes der vom Microcontroller kommenden Bitfolge wieder ein Steuerbit in die zum Microcontroller rückgelesene Bitfolge eingefügt. Das Auslesen des Speicherinhaltes des Schnittstellenregisters B4 geschieht hinsichtlich der Datenfeldbits über die Weiche B3, derart, daß die aus dem Schnittstellenregister B4 gelesenen Datenbits sowohl zum Multiplexer B2 und von dort zusammen mit den Adressenbits und dem mittels der Umsetzeinrichtung B7 eingefügten Steuerbit zurück zum Microcontroller als auch hinsichtlich des reinen Datenfeldes zum Prüfbitgenerator B5 und zu den Funktionsblöcken FB1 und FB2 geschickt werden. Da das zwischen Adressenfeld und Datenfeld befindliche Schreibsteuerbit vor dem Auslesen des Datenfeldes aus dem Schnittstellenregister B4 vom Bitfolgendecoder BD ausgesondert worden ist, steht der Befehl, ob ein Schreib- oder ein Lesevorgang durchgeführt werden soll, bei Beginn der Übertragung des Datenfeldes von dem Schnittstellenregister B4 an den adressierten Funktionsblock FB1 bzw. FB2 zur Verfügung. Da die Adressenbits immer geschrieben werden und nicht dem Schreibbefehl unterliegen, reicht es, das Steuerbit erst nach den Adressenbits anzuordnen.

Wird vom Microcontroller als Steuerbit ein Schreibbefehl geschickt, wird dieser solange gespeichert, wie in das Schnittstellenregister Daten geschrieben werden. Somit ist das einen Schreibbefehl darstellende Steuerbit zur Zeitlage des Discard-Bits verfügbar, um das Übertragen der in das Schnittstellenregister B4 geschriebenen Datenbits an den adressierten Funktionsblock FB1 oder FB2 zuzulassen oder zu unterbinden.

Mit dem Einlesen der vom Schnittstellenregister B4 gelieferten Datenbitfolge in das Datenfeldregister DR des adressierten Funktionsblocks geschieht auch das Einlesen des zu dieser Datenbitfolge gehörenden aktuellen Prüfbits aPB in die Prüfbitspeicherstelle PBS des adressierten Funktionsblocks.

Es wird nun angenommen, daß der Speicherinhalt eines Funktionsblocks zum Microcontroller übertragen werden soll.

Zu diesem Zweck wird vom Microcontroller wieder eine serielle Bitfolge über den Serielleingang Sin an die Ablaufsteuereinrichtung B1 und den Multiplexer B2 geschickt. Das im Steuerbitfeld befindliche Lesesteuersignal wird mit Hilfe des Bitfolgendecoders BD ausgelesen und steht zur Lesesteuerung der Funktionsblöcke FB1 und FB2 bereit. Im Fall eines solchen Leseauftrages kann das Rahmenendesignal unmittelbar nach dem Steuerfeld der vom Microcontroller gelieferten Bitfolge gegeben werden. Auf den Leseauftrag hin wird aus dem Datenfeldregister DR des adressierten Funktionsblocks dessen Speicherinhalt ausgelesen und über den Datenbus DATA sowohl an den Prüfbitgenerator B5 als auch an die Weiche B3 geliefert. Über den Seriellausgang Sout des Multiplexers B2 wird nun zum Microcontroller eine Bitfolge übertragen, welche zunächst die aus dem Schnittstellenregister B4 wieder ausgelesene Adressenbitfolge, das mit Hilfe der Umschalteinrichtung B7 in das Steuerfeld eingefügte Statussignal Q/N und die mittels der Weiche B3 vom adressierten Funktionsblock zum Multiplexer B2 geleitete Datenbitfolge aufweist. Dabei ist mit Hilfe des Prüfbitgenerators B5 für die von dem Funktionsblock gelieferte Datenbitfolge ein aktuelles Prütbit aPB erzeugt und mit dem zuvor in dem adressierten Funktionsblock gespeicherten Prüfbit gPB verglichen worden. Über das Statussignal Q/N wird dem Microcontroller somit mitgeteilt. ob sich der Dateninhalt des gerade ausgelesenen Funktionsblocks seit dessen vorausgehender Adressierung geändert hat oder nicht.

## Patentansprüche

1. Verfahren zur selektiven digitalen Übertragung von Bitfolgen vorbestimmter Rahmenlänge zwischen einer übergeordneten Einrichtung (µC) und einer von mehreren selektiv ansteuerbaren untergeordneten Einrichtungen (FB1, FB2) über eine dazwischen befindliche speicherfähige serielle Schnittstelle (SI), die an ein mit den untergeordneten Einrichtungen (FB1, FB2) verbindendes Bussystem (ADR, DATA) angeschlossen ist;
bei welchem Verfahren:
a) Bitfolgen vorbestimmter maximaler Rahmenlänge mit einem die jeweils anzusteuernde untergeordnete Einrichtung (FB1, FB2) adressierenden Adressenfeld mit einer vorbestimmten Adressenbitzahl, mit einem Steuerinformation enthaltenden Steuerfeld mit einer vorbestimmten Steuerbitzahl und mit einem Datenfeld mit einer maximalen Datenbitzahl verwendet werden;
b) die Bitfolgen von der übergeordneten Einrichtung (µC) seriell gesendet und takt- und bitweise der Reihe nach in die serielle Schnittstelle (SI) geschrieben werden;
c) der Speicherinhalt der seriellen Schnittstelle (SI) takt- und bitweise der Reihe nach in die übergeordnete Einrichtung (µC) rückgelesen wird;
d) wobei während ein und desselben Taktes das zu dem jeweiligen Takt gehörende Bit der seriell empfangenen Bitfolge in die serielle Schnittstelle (SI) geschrieben als auch der daraus resultierende Speicherinhalt, der zu diesem Bit gehört, aus der seriellen Schnittstelle (SI) in die übergeordnete Einrichtung (µC) rückgelesen wird; und
e) von der übergeordneten Einrichtung (µC) ein die Datenübertragung von der serielle Schnittstelle (SI) an die jeweils adressierte untergeordnete Einrichtung (FB1, FB2) unterbindendes Sperrsignal gesendet wird, wenn der rückgelesene Speicherinhalt irgendeiner der Bitstellen mit dem von der übergeordneten Einrichtung (µC) für diese Bitstelle gesendeten Bit nicht übereinstimmt.

2. Verfahren nach Anspruch 1, bei welchem die Datenfeldlänge der jeweils adressierten untergeordneten Einrichtung aus der ihr zugeordneten Adresse entnehmbar ist.

3. Verfahren nach Anspruch 2, bei welchem die den einzelnen untergeordneten Einrichtungen (FB1, FB2) zugeordneten Adressen in einer vorbestimmten Reihenfolge in einem Adressenregister der übergeordneten Einrichtung (µC) gespeichert werden und die Datenfeldlänge der jeweils adressierten untergeordneten Einrichtung aus dem Speicherplatz des Adressenregisters, in dem die jeweilige Adresse gespeichert ist, entnehmbar ist.

4. Verfahren nach einem der Ansprüche 1 bis 3, bei welchem das Steuerfeld der Bitfolge für ein Schreib/Lese-Steuersignal (WR, RD) verwendet wird.

5. Verfahren nach einem der Ansprüche 1 bis 4, bei welchem das Steuerfeld der Bitfolge für ein Statussignal (Q/N) verwendet wird.

6. Verfahren nach Anspruch 5, bei welchem das Steuerfeld nur eine Bitstelle der Bitfolge besetzt und das Steuerfeld der von der übergeordneten Einrichtung (µC) gesendeten Bitfolge für die Übertragung eines Schreib/Lesesignals (WR, RD) und das Steuerfeld der an die übergeordnete Einrichtung (µC) gesendeten Bitfolge für die Übertragung des Statussignals (Q/N) verwendet wird.

7. Verfahren nach einem der Ansprüche 5 oder 6, für eine Schaltungsanordnung, deren untergeordnete Einrichtungen (FB1, FB2) je ein Datenfeldregister (DR) zur Datenspeicherung aufweisen, wobei das Statussignal (Q/N) zur Anzeige verwendet wird, ob sich der Dateninhalt des Datenfeldregisters (DR) der jeweils adressierten untergeordneten Einrichtung geändert hat oder nicht, und bei welchem das Statussignal (Q/N) durch Vergleichen des jeweils aktuellen Dateninhalts mit dem jeweils vorausgehenden Dateninhalt des Datenfeldregisters (DR) der jeweils adressierten untergeordneten Einrichtung (FB1, FB2) oder durch Vergleich eines aus dem aktuellen Dateninhalt gewonnenen aktuellen Prüfbits (aPB) mit einem aus dem vorausgehenden Dateninhalt erhaltenen vorausgehenden Prüfbit (gPB) erzeugt wird.

8. Verfahren nach Anspruch 7, bei welchem zur Erzeugung des Statussignals (Q/N) bei jedem Schreiben in das Datenfeldregister (DR) und/oder bei jedem Lesen aus dem Datenfeldregister (DR) der jeweils adressierten untergeordneten Einrichtung (FB1, FB2) ein Prüfbit erzeugt wird und ein eine Änderung des Speicherinhaltes anzeigendes Statussignal (Q/N) dann erzeugt wird, wenn ein aktuelles Prüfbit (aPB) von dem jeweils vorausgehenden Prüfbit (gPB) abweicht.

9. Verfahren nach einem der Ansprüche 1 bis 8, bei welchem von der übergeordneten Einrichtung (µC) an mindestens die jeweils adressierte untergeordnete Einrichtung (FB1, FB2) ein Schreib- oder Lesesteuersignal (WR, RD) gesendet wird und für den Fall, daß die Datenübertragung von der seriellen Schnittstelle (SI) an die jeweils adressierte untergeordnete Einrichtung (FB1, FB2) unterbunden werden soll, als Sperrsignal ein Nichtschreiben-Steuersignal an die adressierte untergeordnete Einrichtung (FB1, FB2) gesendet wird.

10. Verfahren nach einem der Ansprüche 1 bis 9, bei welchem für mindestens einen Teil der untergeordneten Einrichtungen (FB1, FB2) vorgesehen ist, daß die jeweils adressierte untergeordnete Einrichtung (FB1, FB2) am Ende des Auslesens ihres Dateninhaltes in die übergeordnete Einrichtung (µC) von der übergeordneten Einrichtung (µC) in einen vorbestimmten Ausgangszustand rückgesetzt wird.

11. Verfahren nach einem der Ansprüche 1 bis 10, bei welchem als übergeordnete Einrichtung (µC) ein Microcontroller und als untergeordnete Einrichtungen (FB1, FB2) Funktionseinrichtungen wie beispielsweise Stelleinrichtungen, Sensoren und Statussteuereinrichtungen verwendet werden.

12. Schaltungsanordnung mit einer übergeordneten Einrichtung (µC) und mehreren untergeordneten Einrichtungen (FB1, FB2) und einer dazwischen befindlichen seriellen Schnittstelleneinrichtung (SI) zur selektiven digitalen Übertragung von Bitfolgen zwischen der übergeordneten Einrichtung (µC) und einer jeweils ausgewählten untergeordneten Einrichtung;
a) wobei die Schaltungsanordnung für die Übertragung von Bitfolgen vorgesehen ist, die je eine vorbestimmte maximale Rahmenlänge mit mindestens einem die jeweils anzusteuernde untergeordnete Einrichtung (FB1, FB2) adressierenden Adressenfeld mit einer vorbestimmten Adressenbitzahl, mit einem Steuerinformation enthaltenden Steuerfeld mit einer vorbestimmten Steuerbitzahl und mit einem Datenfeld mit einer maximalen Datenbitzahl aufweist;
b) mit einem taktgesteuerten Schnittstellenregister (B4), das eine mindestens der Summe der Adressenbitzahl und der Datenbitzahl entsprechende Anzahl hinsichtlich Schreib- und Lesezugriff parallel zugängliche, je der Speicherung eines Bits dienende Registerstufen (FF) aufweist und an ein mit den untergeordneten Einrichtungen (FB1, FB2) verbindendes Bussystem (ADR, DATA) anschaltbar ist;
c) mit einer Umsetzeinrichtung (B1, B2), mittels welcher von der übergeordneten Einrichtung (µC) seriell empfangene Bitfolgen zu deren Einschreiben in das Schnittstellenregister (B4) takt- und bitweise der Reihe nach an die einzelnen Registerstufen (FF) übergebbar sind und mittels welcher die Speicherinhalte der einzelnen Registerstufen (FF) zum Rücklesen des Speicherinhaltes des Schnittstellenregisters (B4) in die übergeordnete Einrichtung (µC) und/oder zur Übertragung des Speicherinhalts des Schnittstellenregisters (B4) an die untergeordneten Einrichtungen (FB1, FB2) takt- und bitweise der Reihe nach aus den einzelnen Registerstufen (FF) auslesbar und seriell an die übergeordnete Einrichtung (µC) und/oder an die untergeordneten Einrichtungen (FB1, FB2) sendbar sind;
d) wobei während ein und desselben Taktes das zu dem jeweiligen Takt gehörende Bit der seriell empfangenen Bitfolge in die je zugeordnete Registerstufe (FF) geschrieben und der daraus resultierende Speicherinhalt dieser Registerstufe (FF) in die übergeordnete Einrichtung (µC) rückgelesen werden kann; und
e) wobei von der übergeordneten Einrichtung (µC) ein die Datenübertragung von der Schnittstelleneinrichtung (SI) an die jeweils adressierte untergeordnete Einrichtung (FB1, FB2) unterbindendes Sperrsignal sendbar ist, wenn der rückgelesene Speicherinhalt irgendeiner der Registerstufen (FF) mit dem von der übergeordneten Einrichtung (µC) für diese Registerstufe (FF) gesendeten Bit nicht übereinstimmt.

13. Schaltungsanordnung nach Anspruch 12, bei welcher
die übergeordnete Einrichtung (µC) einen Microcontroller aufweist und die untergeordneten Einrichtungen (FB1, FB2) Funktionseinrichtungen wie z.B. Steuereinrichtungen und/oder Meßeinrichtungen aufweisen.

14. Schaltungsanordnung nach Anspruch 12 oder 13, bei welcher
die Umsetzeinrichtung (B1, B2) einen von der übergeordneten Einrichtung (µC) seriell empfangenden Serielleingang (Sin), einen an die übergeordnete Einrichtung (µC) seriell sendenden Seriellausgang (Sout) und eine der Bitzahl mindestens des Adressenfeldes und des Datenfeldes entsprechende Anzahl Paare von parallelen Paralleldatenausgängen (PA) und parallelen Paralleldateneingängen (PE) aufweist;
und die Registerstufen (FF) des Schnittstellenregisters (B4) je einen Takteingang (CLK), einen Biteingang (BE) und einen Bitausgang (BA) aufweisen;
wobei die Biteingänge (BE) und die Bitausgänge (BA) der Registerstufen (FF) mit je einem der Paralleldatenausgänge (PA) bzw. Paralleldateneingänge (PE) der Umsetzeinrichtung (B1, B2) verbunden sind.

15. Schaltungsanordnung nach einem der Ansprüche 12 bis 14, bei welcher die Umsetzeinrichtung (B1, B2) einen Multiplexer (B2) und eine diesen steuernde Ablaufsteuereinrichtung (B1) aufweist.

16. Schaltungsanordnung nach Anspruch 15, bei welcher
die in die untergeordneten Einrichtungen (FB1, FB2) geschriebenen Bitfolgen und die von den untergeordneten Einrichtungen (FB1, FB2) ausgelesenen Bitfolgen nur das Adressenfeld und das Datenfeld der von der übergeordneten Einrichtung (µC) jeweils gesendeten bzw. empfangenen Bitfolge enthalten,
jeder untergeordneten Einrichtung eine vorbestimmte Datenbitzahl zugeordnet und diese aus der je zugehörigen Adresse entnehmbar ist und die Ablaufsteuereinrichtung (B1) aufweist:
einen adressenabhängig programmierbaren Bitzähler (BZ), der unter Zuführung der Adressenfeldbits der jeweils zu übertragenden Bitfolge ein Ablaufsteuersignal erzeugt, aus dem für die jeweils zu übertragende Bitfolge die Steuerfeldposition innerhalb der Bitfolge entnehmbar ist,
und einen Bitfolgendekoder (BD), der das Ablaufsteuersignal und eine von der übergeordneten Einrichtung (µC) gesendete serielle Bitfolge empfangen, aus einer solchen Bitfolge mindestens ein Steuerbit entnehmen und beim Übertragen einer Bitfolge von einer der untergeordneten Einrichtungen (FB1, FB2) zu der übergeordneten Einrichtung (µC) in die von der untergeordneten Einrichtung erhaltene Bitfolge an der Steuerfeldposition mindestens ein Steuerbit einfügen kann.

17. Schaltungsanordnung nach Anspruch 16, bei welcher
der Bitfolgendekoder (BD) aufweist: einen Steuersignalausgang (WR, RD, RES), an dem er ein dem entnommenen Steuerbit entsprechendes Steuersignal abgeben kann, und einen Steuersignaleingang (Q/N), an dem er ein dem einzufügenden Steuerbit entsprechendes Informationssignal übernehmen kann.

18. Schaltungsanordnung nach Anspruch 17, bei welcher
das dem entnommenen Steuerbit entsprechende Steuersignal ein Schreib- oder Lesesignal ist, mittels welchem bestimmbar ist, ob die jeweils adressierte untergeordnete Einrichtung (FB1, FB2) einem Schreib- oder einem Lesevorgang zu unterziehen ist.

19. Schaltungsanordnung nach Anspruch 17 oder 18, bei welcher
das dem einzufügenden Steuerbit entsprechende Informationssignal ein Statussignal (Q/N) ist, mittels welchem der übergeordneten Einrichtung (µC) Statusinformation bezüglich der jeweils adressierten untergeordneten Einrichtung zuführbar ist.

20. Schaltungsanordnung nach Anspruch 19, bei welcher
das Statussignal (Q/N) Information darüber enthält, ob sich der Dateninhalt der jeweils adressierten untergeordneten Einrichtung seit dem letzten Schreib- und/oder Lesevorgang geändert hat oder nicht.

21. Schaltungsanordnung nach einem der Ansprüche 15 bis 20, bei welcher der Multiplexer (B2) aufweist:
einen den Serielleingang (Sin) der Umsetzeinrichtung (B1, B2) bildenden Eingang;
einen den Seriellausgang (Sout) der Umsetzeinrichtung (B1, B2) bildenden Ausgang;
eine Schalterstufenreihe mit einer der Registerstufenzahl des Schnittstellenregisters (B4) entsprechenden Anzahl Schalterstufen (B8), die je einen der Paralleleingänge (PE) und einen der Parallelausgänge (PA) der Umsetzeinrichtung (B1, B2) sowie einen Schaltsteuereingang (SSL1) aufweisen,
wobei die Paralleleingänge (PE) alle mit dem Serielleingang (Sin) und die Parallelausgänge (PA) alle mit dem Seriellausgang (Sout) verbunden sind;
eine Umschalteinrichtung (B7), die in Abhängigkeit von einem ihr zugeführten Umschaltsteuersignal eine aus dem Schnittstellenregister (B4) ausgelesene Bitfolge entweder zu der übergeordneten Einrichtung (µC) oder zu den untergeordneten Einrichtungen (FB1, FB2) leiten kann;
und einen Demultiplexer (DMX), der in Abhängigkeit von dem von der Ablaufsteuereinrichtung (B1) empfangenen Ablaufsteuersignal einerseits die einzelnen Schalterstufen der Reihe nach für ein Einschreiben bzw. Auslesen der je zugehörigen Registerstufe (FF) des Schnittstellenregisters (B4) steuern und andererseits das Umschaltsteuersignal erzeugen kann.

22. Schaltungsanordnung nach Anspruch 21, bei welcher
die Umschalteinrichtung (B7) einen mit der Ablaufsteuereinrichtung (B1) verbundenen Steuerbiteingang (SSL2) aufweist und über das Ablaufsteuersignal derart steuerbar ist, daß sie beim Rücklesen der in das Schnittstellenregister (B4) geschriebenen Bitfolge in die übergeordnete Einrichtung (µC) den Steuerbiteingang während der Zeit, während welcher die übergeordnete Einrichtung (µC) innerhalb der jeweiligen Bitfolge das Steuerfeld erwartet, zum Seriellausgang (Sout) des Multiplexers (B2) durchschaltet.

23. Schaltungsanordnung nach Anspruch 21 oder 22, bei welcher die Schalterstufen (B8) des Multiplexers (B2) derart steuerbar sind, daß die von dem Demultiplexer (DMX) jeweils für einen Schreibund/oder Lesevorgang der zugehörigen Registerstufe (FF) ausgewählte Schalterstufe (B8) eine Verbindung zwischen dem Paralleleingang (PE) und dem Biteingang (BE) bzw. dem Bitausgang (BA) und dem Parallelausgang (PA) des betroffenen Schalterstufen-Registerstufen-Paares und für jedes der restlichen Schalterstufen-Registerstufen-Paare eine Verbindung zwischen dem Bitausgang (BA) und dem Biteingang (BE) der je zugehörigen Registerstufe (FF) herstellt.

24. Schaltungsanordnung nach einem der Ansprüche 12 bis 23, bei welcher zwischen die Umsetzeinrichtung (B1, B2), das Schnittstellenregister (B4) und die untergeordneten Einrichtungen (FB1, FB2) eine mittels eines Schreib/Lesesteuersignals steuerbare Weiche (B3) geschaltet ist, die bei Erhalt eines Schreibsteuersignals die im Schnittstellenregister (B4) gespeicherte Bitfolge sowohl zur Umsetzeinrichtung (B1, B2) als auch zu den untergeordneten Einrichtungen (FB1, FB2) und bei Erhalt eines Lesesteuersignals die aus der jeweils adressierten untergeordneten Einrichtung ausgelesene Bitfolge zur Umsetzeinrichtung (B1, B2) leiten kann.

25. Schaltungsanordnung nach Anspruch 24, bei welcher die zwischen Weiche (B3) und untergeordneten Einrichtungen (FB1, FB2) übertragenen Bitfolgen einem Prüfbitgenerator (B5) zuführbar sind, mittels welchem aus dem Bitmuster der jeweiligen Bitfolge ein aktuelles Prüfbit (aPB) erzeugbar ist, das mittels einer Prüfbitvergleichseinrichtung (X8) mit einem für die gleiche untergeordnete Einrichtung (FB1, FB2) zuvor erzeugten Prüfbit (gPB) vergleichbar ist, wobei ein aus dem Vergleich hervorgehendes Vereleichsergebnisbit als Steuerbit in die der übergeordneten Einrichtung (µC) zuzuführende Bitfolge einfügbar ist.

26. Schaltungsanordnung nach Anspruch 25, bei welcher der Prüfbitsgenerator (B5) in Reihe geschaltete XOR-Glieder (X1 bis X7) aufweist, deren Zahl um eins geringer ist als die maximalen Datenbitzahl des Datenfeldes und die je zwei XOR-Eingänge und einen XOR-Ausgang besitzen, wobei den beiden XOR-Eingängen eines ersten XOR-Gliedes (X1) das erste bzw. zweite Bit der zu prüfenden Bitfolge und den beiden XOR-Eingängen der weiteren XOR-Glieder (X2 bis X7) je ein weiteres Bit der zu prüfenden Bitfolge bzw. das Ausgangssignal des je vorausgehenden XOR-Gliedes zuführbar sind und wobei am XOR-Ausgang des letzten XOR-Gliedes (X7) das Prüfbit abnehmbar ist.

27. Schaltungsanordnung nach Anspruch 26, bei welcher dem letzten XOR-Glied (X7) ein die Prüfbitvergleichseinrichtung bildendes weiters XOR-Glied (X8) mit ebenfalls zwei XOR-Eingängen und einem XOR-Ausgang folgt, wobei einem ersten der beiden XOR-Eingängen des weiteren XOR-Gliedes (X8) das jeweils erzeugte Prüfbit (aPB) und dem zweiten XOR-Eingang des weiteren XOR-Gliedes (X8) das jeweils zuvor erzeugte Prüfbit (gPB) zuführbar sind und am XOR-Ausgang des weiteren XOR-Gliedes (X8) ein als Änderungsanzeigesignal, insbesondere Statussignal (Q/N), verwendbares Prüfbitvergleichssignal abnehmbar ist.

28. Schaltungsanordnung nach einem der Ansprüche 25 bis 27, bei welcher das jeweils erzeugte Prüfbit (aPB) in ein Prüfbitregister einschreibbar und zum Vergleich mit einem nachfolgend erzeugten Prüfbit dem zweiten XOR-Eingang des weiteren XOR-Gliedes (X8) zuführbar ist.

29. Schaltungsanordnung nach einem der Ansprüche 12 bis 28, bei welcher mindestens ein Teil der untergeordneten Einrichtungen (FB1, FB2) je ein Datenfeldregister (DR) und einen Adressendekoder (AD), welcher beim Erhalt der für die jeweilige untergeordnete Einrichtung (FB1, FB2) bestimmten Adressenbitfolge das Datenfeldregister (DR) zum Einschreiben oder Auslesen freigibt, aufweist.

30. Schaltungsanordnung nach Anspruch 29, bei welcher das Datenfeldregister (DR) eine Anzahl Datenfeldregisterstufen (DS) aufweist, die um eins höher ist als die für die jeweilige untergeordnete Einrichtung (FB1, FB2) vorbestimmte Datenbitzahl, wobei eine der Datenfeldregisterstufen als Prüfbitregister (PBS) verwendbar ist.

31. Schaltungsanordnung nach Anspruch 29 oder 30, bei welcher das Datenfeldregister (DR) einen Rücksetzeingang (RES) aufweist, über welchen der Speicherinhalt des Datenfeldregisters (DR) nach einem Auslesevorgang in einen vorbestimmten Anfangszustand rücksetzbar ist.

## Claims

1. A method of digitally transferring bit sequences of predetermined frame length in selective manner between a master means (µC) and one of several selectively controllable slave means (FB1, FB2) via a serial interface (SI) which is disposed therebetween and capable of storing and which is connected to a bus system (ADR, DATA) establishing a connection to the slave means (FB1, FB2);
wherein
a) bit sequences of predetermined maximum frame length are employed, comprising an address field having a predetermined address bit number and addressing the respective slave mans (FB1, FB2) to be controlled, a control field having a predetermined control bit number and containing control information, and a data field having a maximum data bit number;
b) the bit sequences are sent in serial manner from the master means (µC) and are written in clock- and bitwise manner in succession to the serial interface (SI);
c) the memory contents of the serial interface (SI) are read back in clock- and bitwise manner in succession to the master means (µC);
d) and, during one and the same clock, the bit of the serial bit sequence received, which belongs to the respective clock, is written to the serial interface (SI), and the memory contents resulting therefrom and belonging to this bit is read back from the serial interface (SI) to the master means (µC); and
e) a blocking signal preventing the data transfer from the serial interface (SI) to the respective addressed slave means (FB1, FB2) is sent from the master means (µC) when the read-back memory contents of any of the bit locations is not in conformity with the bit sent from the master means (µC) for this bit location.

2. The method of claim 1,
wherein the data field length of the respective addressed slave means is gatherable from the address associated therewith.

3. The method of claim 2,
wherein the addresses associated with the individual slave means (FB1, FB2) are stored in a predetermined sequence in an address register of the master means (µC), and the data field length of the respective addressed slave means is gatherable from the storage location of the address register
in which the respective address is stored.

4. The method of any of claims 1 to 3,
wherein the control field of the bit sequence is employed for a write/read control signal (WR, RD).

5. The method of any of claims 1 to 4,
wherein the control field of the bit sequence is employed for a status signal (Q/N).

6. The method of claim 5,
wherein the control field occupies only one bit location of the bit sequence, and the control field of the bit sequence sent from the master means (µC) is used for transferring a write/read signal (WR, RD) and the control field of the bit sequence sent to the master means (µC) is used for transferring the status signal (Q/N).

7. The method of any of claims 5 or 6, for a circuit arrangement the slave means (FB1, FB2) of which each have a data field register (DR) for storing data, the status signal (Q/N) being used for indicating whether or not the data contents of the data field register (DR) of the respective addressed slave means have changed, and wherein the status signal (Q/N) is generated by comparison of the respective current data contents with the respective preceding data contents of the data field register (DR) of the respective addressed slave means (FB1, FB2), or by comparison of a current test bit (aPB) obtained from the current data contents with a test bit (gPB) obtained from the preceding data contents.

8. The method of claim 7,
wherein, for generating the status signal (Q/N) during each write operation in the data field register (DR) and/or each read operation from the data field register (DR) of the respective addressed slave means (FB1, FB2), a test bit is generated and a status signal (Q/N) indicating a change in memory contents is generated when a current test bit (aPB) differs from the respective preceding test bit (gPB).

9. The method of any of claims 1 to 8,
wherein a write or read control signal (WR, RD) is sent from the master means (µC) at least to the respective addressed slave means (FB1, FB2) and, in the event that the data transfer from the serial interface (SI) to the respective addressed slave means (FB1, FB2) is to be prevented, a non-write control signal is sent as blocking signal to the addressed slave means (FB1, FB2).

10. The method of any of claims 1 to 9,
wherein there is provided for at least part of the slave means (FB1, FB2) that the respective addressed slave means (FB1, FB2), at the end of reading out of its data contents to the master means (µC) is reset to a predetermined initial state by the master means (µC).

11. The method of any of claims 1 to 10,
wherein a microcontroller is used as master means (µC) and function means, such as controllers, sensors and status control means, are used as slave means (FB1, FB2).

12. A circuit arrangement comprising a master means (µC) and a plurality of slave means (FB1, FB2) and a serial interface means (SI) provided therebetween, for digitally transferring bit sequences in selective manner between the master means (µC) and a respective selected slave means;
a) the circuit arrangement being provided for transferring bit sequences each having a predetermined maximum frame length and comprising at least one address field having a predetermined address bit number and addressing the respective slave means (FB1, FB2) to be controlled, a control field having a predetermined control bit number and containing control information, and a data field having a maximum data bit number;
b) comprising a clocked interface register (B4) which has a number of register stages (FF) corresponding at least to the sum of the address bit number and data bit number and being accessible in parallel as regards write and read access and each serving to store one bit, and which is adapted to be connected to a bus system (ADR, DATA) establishing a connection to the slave means (FB1, FB2);
c) comprising a conversion means (B1, B2) through which bit sequences received in serial manner from the master means (µC) can be transferred in clock- and bitwise manner in succession to the individual register stages (FF) for writing them to the interface register (B4), and through which the memory contents of the individual register stages (FF), for reading back the memory contents of the interface register (B4) to the master means (µC) and/or for transferring the memory contents of the interface register (B4) to the slave means (FB1, FB2), can be read out in clock- and bitwise manner in succession from the individual register stages (FF) and can be sent in serial manner to the master means (µC) and/or to the slave means (FB1, FB2);
d) in which, during one and the same clock, the bit of the serial bits received, which belongs to the respective clock, can be written to the respective associated register stage (FF), and the memory contents of this register stage (FF) resulting therefrom can be read back to the master means (µC); and
e) a blocking signal preventing the data transfer from the interface means (SI) to the respective addressed slave means (FB1, FB2) can be sent from the master means (µC) when the read-back memory contents of any of the register stages (FF) is not in conformity with the bit sent from the master means (µC) for this register stage (FF).

13. The circuit arrangement of claim 12,
wherein the master means (µC) comprises a microcontroller, and the slave means (FB1, FB2) comprise function means, such as control means and/or measuring means.

14. The circuit arrangement of claim 12 or 13,
wherein the conversion means (B1, B2) comprises a serial input (Sin) for serial reception from the master means (µC), a serial output (Sout) for serial transmission to the master means (µC), and a number of pairs of parallel parallel-data outputs (PA) and parallel parallel-data inputs (PE), said number corresponding to the bit number at least of the address field and the data field; and
the register stages (FF) of the interface register (B4) each having a clock input (CLK), a bit input (BE) and a bit output (BA);
the bit inputs (BE) and the bit outputs (BA) of the register stages (FF) being connected to one each of the parallel-data outputs (PA) and parallel-data inputs (PE) of the conversion means (B1, B2), respectively.

15. The circuit arrangement of any of claims 12 to 14,
wherein the conversion means (B1, B2) comprises a multiplexer (B2) and a process control means (B1) controlling the same.

16. The circuit arrangement of claim 15, wherein
the bit sequences written in the slave means (FB1, FB2) and the bit sequences read from the slave means (FB1, FB2) contain only the address field and the data field of the respective bit sequence transmitted and received from the master means (µC), respectively;
a predetermined data bit number is associated with each slave means, which is gatherable from the respective associated address;
and the process control means (B1) comprises:
a bit counter (BZ) which is programmable in address-dependent manner and which, while fed with the address field bits of the respective bit sequence to be transferred, generates a process control signal from which the control field position within the bit sequence is gatherable for the respective bit sequence to be transmitted,
and a bit sequence decoder (BD) which can receive the process control signal and a serial bit sequence transmitted from the master means (µC), and can take out from such a bit sequence at least one control bit and, during transfer of a bit sequence from one of the slave means (FB1, FB2) to the master means (µC), can introduce at least one control bit at the control field position into the bit sequence received from the slave means.

17. The circuit arrangement according to claim 16,
wherein the bit sequence decoder (BD) comprises:
a control signal output (WR, RD, RES) for outputting a control signal corresponding to the taken out control bit, and a control signal input (Q/N) for taking over an information signal corresponding to the control bit to be introduced.

18. The circuit arrangement according to claim 17,
wherein the control signal corresponding to the taken out control bit is a write or read signal by means of which it can be determined whether the respective addressed slave means (FB1, FB2) is to be subject to a write or a read operation.

19. The circuit arrangement of claim 17 or 18,
wherein the information signal corresponding to the control bit to be introduced is a status signal (Q/N) by means of which status information with respect to the respective addressed slave means can be supplied to the master means (µC).

20. The circuit arrangement of claim 19,
wherein the status signal (Q/N) contains information as to whether or not the data contents of the respective addressed slave means have changed since the last write and/or read operation.

21. The circuit arrangement of any of claims 15 to 20,
wherein the multiplexer (B2) comprises:
an input constituting the serial input (Sin) of the conversion means (B1, 82);
an output constituting the serial output (Sout) of the conversion means (B1, B2);
a switch stage series having a number of switch stages (B8) corresponding to the number of register stages of the interface register (B4), said switch stages (B8) each having one of the parallel inputs (PE) and one of the parallel outputs (PA) of the conversion means (B1, B2) as well as a switching control input (SSL1),
the parallel inputs (PE) being all connected to the serial input (Sin) and the parallel outputs (PA) being all connected to the serial output (Sout);
a switching means (B7) which, in accordance with a switching control signal supplied thereto, can pass a bit sequence read out from the interface register (B4) either to the master means (µC) or to the slave means (FB1, FB2);
and a demultiplexer (DMX) which, in accordance with the process control signal received from the process control means (B1), on the one hand can control the individual switch stages in succession for writing in and reading out, respectively, the respective associated register stage (FF) of the interface register (B4), and on the other hand can generate the switching control signal.

22. The circuit arrangement of claim 21,
wherein the switching means (B7) comprises a control bit input (SSL2) connected to the process control means (B1) and is controllable via the process control signal such that, upon reading back of the bit sequence written in the interface register (B4) to the master means (µC), it connects the control bit input through to the serial output (Sout) of the multiplexer (B2) during that period of time in which the master means (µC) expects the control field within the respective bit sequence.

23. The circuit arrangement of claim 21 or 22,
wherein the switch stages (N8) of the multiplexer (B2) are controllable such that the switch stage (B8) selected from the demultiplexer (DMX) for a respective write and/or read operation of the associated register stage (FF) establishes a connection between the parallel input (PE) and the bit input (BE) and between the bit output (BA) and the parallel output (PA), respectively, of the switch stage/register stage pair concerned and, for each one of the remaining switch stage/register stage pairs, establishes a connection between the bit output (BA) and the bit input (BE) of the respective associated register stage (FF).

24. The circuit arrangement of any of claims 12 to 23,
wherein, between the conversion means (B1, B2), the interface register (B4) and the slave means (FB1, FB2), there is connected a switching unit (B3) that is controllable by means of a write/read control command and, upon receipt of a write control command, can pass the bit sequence stored in the interface register (B4) both to the conversion means (B1, B2) and to the slave means (FB1, FB2) and, upon receipt of a read control signal, can pass the bit sequence read out from the respective addressed slave means to the conversion means (B1, B2).

25. The circuit arrangement of claim 24,
wherein the bit sequences transferred between switching unit (B3) and slave means (FB1, FB2) can be fed to a test bit generator (B5) by means of which a current test bit (aPB) can be produced from the bit pattern of the respective bit sequence, which can be compared, by means of a test bit comparison means (X8), with a test bit (gPB) previously produced for the same slave means (FB1, FB2), with a comparison result bit resulting from the comparison being adapted to be introduced, as a control bit, into the bit sequence to be fed to the master means (µC).

26. The circuit arrangement of claim 25,
wherein the test bit generator (B5) has series-connected XOR elements (X1 to X7), the number of which is by one less than the maximum data bit number of the data field and which each have two XOR inputs and one XOR output, the two XOR inputs of a first XOR element (X1) being adapted to be fed with the first and second bit, respectively, of the bit sequence to be tested, and the two XOR inputs of the additional XOR elements (X2 to X7) being adapted to be fed with one further bit each of the bit sequence to be tested and, respectively, with the output signal of the respective preceding XOR element, and the test bit being available at the XOR output of the last XOR element (X7).

27. The circuit arrangement of claim 26,
wherein the last XOR element (X7) is followed by an additional XOR element (X8) which constitutes the test bit comparison means and also has two XOR inputs and one XOR output, a first one of the two XOR inputs of the additional XOR element (X8) being adapted to have applied thereto the respective test bit (aPB) produced, and the second XOR input of the additional XOR element (X8) being adapted to have applied thereto the respective previously produced test bit (gPB), and a test bit comparison signal usable as change indication signal, in particular as status signal (Q/N), being available at the XOR output of the additional XOR element (X8).

28. The circuit arrangement of any of claims 25 to 27,
in which the respective test bit (aPB) produced can be written to a test bit register and, for comparison with a test bit produced subsequently, can be supplied to the second XOR input of the additional XOR element (X8).

29. The circuit arrangement of any of claims 12 to 28,
wherein at least part of the slave means (FB1, FB2) comprises a data field register (DR) and an address decoder (AD) each, which upon receipt of the address bit sequence intended for the respective slave means (Fb1, Fb2) releases the data field register (DR) for writing or reading.

30. The circuit arrangement of claim 29,
wherein the data field register (DR) comprises data field register stages (DS) in a number that is by one higher than the data bit number predetermined for the respective slave means (FB1, FB2), one of the data field register stages being usable as test bit register (PBS).

31. The circuit arrangement of claim 29 or 30,
wherein the data field register (DR) comprises a resetting input (RES) via which the memory contents of the data field register (DR), after a read-out operation, can be set back to a predetermined initial stage.

## Revendications

1. Méthode de transmission numérique sélective de séries de bits de longueur de trame prédéfinie, entre un système dominant (µC) et l'un de plusieurs sous-systèmes (FB1, FB2) commandables sélectivement par l'intermédiaire d'une interface sérielle (SI) dotée de mémoire, qui se trouve entre eux et qui est raccordée à un système de bus (ADR, DATA) relié aux sous-systèmes (FB1, FB2), méthode selon laquelle :
a) des séries de bits de longueur de trame prédéfinie sont utilisées avec une zone d'adresse adressant chaque fois un sous-système à commander (FB1, FB2) et comprenant un nombre de bits d'adresse prédéfini, avec une zone de commande contenant une information de commande et comprenant un nombre prédéfini de bits de commande et avec une zone de données comprenant un nombre maximal de bits de données ;
b) les séries de bits sont envoyées en série par le système dominant (µC), elles sont écrites dans l'interface sérielle (SI) en série cadencée bit par bit ;
c) le contenu de la mémoire de l'interface sérielle (SI) est lu en retour dans le dispositif dominant (µC) en série cadencée bit par bit ;
d) pendant une seule et même impulsion, le bit appartenant à celle-ci dans la série de bits reçue, est écrit dans l'interface sérielle (SI) et en même temps le contenu de mémoire en résultant, qui appartient à ce bit, est lu en retour à partir de cet interface, dans le système dominant (µC) ;
e) par le système dominant (µC) est émis un signal interrompant la transmission de données de l'interface sérielle (SI) aux sous-systèmes (FB1, FB2) adressés, si le contenu mémorisé lu en retour, d'une quelconque des positions binaires ne correspond pas au bit envoyé pour cette position par le système dominant (µC).

2. Méthode selon la revendication 1, dans laquelle la longueur du champ de données de chaque sous-système adressé peut être saisie à partir de l'adresse qui lui est associée.

3. Méthode selon la revendication 2, dans laquelle les adresses associées aux sous-systèmes (FB1, FB2) individuels sont mémorisées selon une séquence prédéfinie dans un registre d'adresses du système dominant (µC) et la longueur de champ de données de chaque sous-système adressé peut être saisie à partir de la place du registre d'adresses où cette adresse est mémorisée.

4. Méthode selon une des revendications 1 à 3, dans laquelle la zone de commande de la série de bits est utilisé pour un signal de commande d'écriture/lecture (WR, RD).

5. Méthode selon une des revendications 1 à 4, dans laquelle la zone de commande de la série de bits est utilisé pour un signal d'état (Q/N).

6. Méthode selon la revendication 5, dans laquelle la zone de commande occupe seulement une position binaire de la série de bits, la zone de commande de la série de bits envoyée par le système dominant (µC) étant utilisée pour la transmission d'un signal de lecture/écriture (WR, RD), tandis que la zone de commande de la série de bits envoyée au système dominant (µC) est utilisée pour la transmission du signal d'état (Q/N).

7. Méthode selon la revendication 5 ou 6, pour un circuit dont les sous-systèmes (FB 1, FB2) présentent chacun un registre de champ de données (DR) pour mémoriser des données, le signal d'état (Q/N) étant utilisé pour indiquer si le contenu du registre de le champ de données (DR) de chaque sous-système adressé a changé ou non, méthode selon laquelle le signal d'état (Q/N) est produit chaque fois en comparant le contenu actuel de données au contenu précédent du registre de champ de données (DR) du sous-système (FB1, FB2) adressé ou par comparaison d'un bit de contrôle actuel déduit du contenu actuel de données avec le bit de contrôle précédent (gPB) obtenu à partir du contenu des données précédent.

8. Méthode selon la revendication 7, selon laquelle pour obtenir le signal d'état (Q/N) à chaque écriture dans le registre de champ de données (DR) et/ou à chaque lecture faite dans ce registre (DR) par le sous-système (FB1, FB2) adressé, un bit de contrôle est établi et un signal d'état (Q/N) indiquant une modification du contenu de la mémoire est produit si le bit de contrôle actuel (aPB) diffère du bit de contrôle précédent (gPB).

9. Méthode selon une des revendications 1 à 8, selon laquelle le dispositif dominant (µC) envoie à au moins le sous-système (FB1, FB2) adressé un signal de commande d'écriture ou de lecture (WR, RD) et dans le cas où la transmission de données de l'interface sérielle (SI) au sous-système (FB1, FB2) adressé doit être interrompue, un signal de commande de non-écriture est envoyé en tant que signal d'arrêt au sous-système (FB1, FB2) adressé.

10. Méthode selon une des revendications 1 à 9, selon laquelle, pour au moins une partie des sous-systèmes (FB 1, FB2), il est prévu que chaque fois le sous-système adressé (FB1, FB2) est ramené, par le système dominant (µC), à un état initial prédéfini à la fin de la lecture du contenu de ses données effectuée dans ce système (µC).

11. Méthode selon une des revendications 1 à 10, selon laquelle sont utilisés en tant que système dominant (µC) un micro-contrôleur et comme sous-systèmes (FB1, FB2) des dispositifs fonctionnels, comme par exemple des dispositifs de positionnement, des capteurs et des dispositifs de commande d'état.

12. Circuit comprenant un système dominant (µC) et plusieurs sous-systèmes (FB1, FB2) avec entre eux un dispositif d'interface sérielle (SI) pour la transmission numérique sélective de séries de bits entre le système dominant (µC) et un sous-système sélectionné, dans lequel :
a) le circuit est prévu pour transmettre des séries de bits ayant chacune une longueur de trame prédéfinie et ce circuit présente au moins un champ d'adresses adressant le sous-système (FB1, FB2) à commander et comprenant un nombre de bits d'adresses prédéfini, un champ de commande contenant une information de commande et comprenant un nombre de bits de commande prédéfini et un champ de données présentant un nombre maximal de bits de données ;
b) un registre d'interface (B4) synchrone, présente des étages de registre (FF) servant à mémoriser chaque fois un bit, qui sont accessibles en parallèle en ce qui concerne la lecture et l'écriture et dont le nombre correspond au moins à la somme des nombres de bits d'adresse et de bits de données, ce registre pouvant être connecté au système-bus (ADR, DATA) relié aux sous-systèmes (FB1, FB2) ;
c) un dispositif de conversion (B1, B2) par lequel des séries de bits reçues par le système dominant (µC) peuvent pour leur inscription dans le registre d'interface (B4) être transmises en série cadencée bit par bit aux différents étages de registre (FF), et ce dispositif pour permettre la lecture en retour du contenu mémorisé dans le registre d'interface (B4) dans le dispositif dominant (µC) et/ou pour transmettre ce contenu mémorisé aux sous-systèmes (FB 1, FB2) peut lire en série cadencée bit par bit les contenus des différents étages de registre (FF) et les envoyer en série au système dominant (µC) et aux sous-systèmes (FB1, FB2) ;
d) pendant une seule et même impulsion, le bit appartenant à celle-ci parmi les bits reçus en série est écrit dans l'étage de registre (FF) associé et le contenu mémorisé en résultant dans cet étage (FF) peut être lu en retour dans le dispositif dominant (µC) ;
e) du dispositif dominant (µC) un signal d'arrêt interrompant la transmission de données du dispositif d'interface (SI) aux sous-systèmes (FB1, FB2) adressés, peut être envoyé si le contenu mémorisé, lu en retour, d'un quelconque des étages de registre (FF) ne correspond pas au bit envoyé à ce registre par le système dominant (µC).

13. Circuit selon la revendication 12, dans lequel le système dominant (µC) présente un micro-contrôleur et les sous-systèmes (B1, FB2) présentent des dispositifs fonctionnels, comme par exemple des dispositifs de commande et/ou des dispositifs de mesure.

14. Circuit selon la revendication 12 ou 13, dans lequel :
le dispositif de conversion (B1, B2) présente une entrée sérielle (Sin) alimentée en série par le système dominant (µC), une sortie sérielle (Sout) alimentant en série le système dominant (µC) et des paires de sortie parallèles de données parallèles (PA) et des entrées parallèles de données parallèles (PE) en nombre correspondant au nombre de bits d'au moins le champ d'adresses et le champ de données ;
les étages (FF) du registre d'interface (B4) présentent chacun une entrée de signaux de rythme (CLK), une entrée de bits (BE) et une sortie de bits (BA) ;
les entrées de bits (BE) et les sorties de bits (BA) des étages de registre (FF) sont reliées chacune à une des sorties de données parallèles (PA) et à une des entrées de données parallèles (PE) respectivement du dispositif de conversion, (B1, B2).

15. Circuit selon les revendications 12 à 14, dans lequel le dispositif de conversion (B 1, B2) présente un multiplexeur (B2) et un dispositif de commande de fonctionnement (B1) pilotant celui-ci.

16. Circuit selon la revendication 15, dans lequel :
les séries de bits inscrites dans les sous-systèmes (FB1, FB2) et les séries de bits lues par ceux-ci contiennent seulement le champ d'adresses et le champ de données de la série de bits envoyée ou reçue par le système dominant (µC) ;
à chaque sous-système est associé un nombre de données prédéfini qui peut être saisi à partir de l'adresse correspondante ;
le dispositif de commande de fonctionnement (B1) comprend :
un compteur de bits (BZ) programmable et dépendant de l'adresse, qui produit un signal de commande de déroulement lors de l'amenée du bit du champ d'adresses de chaque série de bits à transmettre, et à partir de ce signal, la position de la zone de commande à l'intérieur de la série de bits peut être saisie pour la série de bits à transmettre,
et un décodeur de série de bits (BD) qui peut recevoir le signal de commande de déroulement et une série de bits envoyée par le système dominant (µC) et dans laquelle peut être saisi au moins un bit de commande, et pour transmettre une série de bits d'un des sous-systèmes (FB1, FB2) au système dominant (µC) au moins un bit de commande peut être introduit à la position de zone de commande dans la série de bits conservée par le sous-système.

17. Circuit selon la revendication 16, dans lequel le décodeur de série de bits (BD) présente une sortie de signal de commande (WR, RD, RES) permettant de délivrer un signal de commande correspondant au bit de commande saisi, ainsi qu'une entrée de signal de commande (Q/N) où le décodeur peut recevoir un signal d'information correspondant au bit de commande à insérer.

18. Circuit selon la revendication 17, dans lequel le signal de commande correspondant au bit de commande saisi est un signal d'écriture ou de lecture permettant de déterminer si le sous-système (FB1, FB2) adressé doit être soumis à une opération d'écriture ou de lecture.

19. Circuit selon la revendication 17 ou 18, dans lequel le signal d'information correspondant au bit de commande à insérer est un signal d'état (Q/N) par lequel peut être amenée au système dominant (µC) l'information d'état correspondant au sous-système adressé.

20. Circuit selon la revendication 19, dans lequel le signal d'état (Q/N) contient de plus une information indiquant si le contenu des données du sous-système adressé a changé ou non depuis la dernière opération d'écriture et/ou de lecture.

21. Circuit selon une des revendications 15 à 20, dans lequel le multiplexeur (B2) comprend :
une entrée constituant l'entrée sérielle (Sin) du dispositif de conversion (B1, B2) ;
une sortie constituant la sortie sérielle (Sout) du dispositif de conversion (B1, B2) ;
une série d'étages de commutation avec des étages (B8) dont le nombre correspond au nombre des étages du registre d'interface (B4) et qui présentent chacun une des entrées parallèles (PE) et une des sorties parallèles (PA) du dispositif de conversion (B1, B2) ainsi qu'une entrée de commande de commutation (SSL1), les entrées parallèles (PE) étant toutes reliées à l'entrée de série (SIN) tandis que les sorties parallèles (PA) sont toutes reliées à la sortie sérielle (Sout) ;
un dispositif de commutation (B7) qui, en fonction d'un signal de commande de commutation à lui adressé, peut envoyer une série de bits lue dans le registre d'interface (B4), soit au système dominant (µC) soit aux sous-systèmes (FB1, FB2) et un démultiplexeur (DMIX) qui, en fonction du signal de commande de fonctionnement reçu du dispositif de commande de fonctionnement (B1) peut, d'une part commander les étages de commutation individuels en série pour écrire ou lire l'étage de registre (FF) correspondant du registre d'interface (B4), d'autre part produire le signal de commande de commutation.

22. Circuit selon la revendication 21, dans lequel le dispositif de commutation (B7) présente une entrée de bits de commande (SSL2) reliée au dispositif de commande (B1) et qui peut être commandée par le signal de commande de fonctionnement, de manière que le dispositif (B7), par lecture en retour de la série de bits écrite dans le registre d'interface (B4), commute, dans le système dominant (µC), l'entrée de bits de commande à la sortie sérielle (Sout) du multiplexeur (B2) pendant le temps au cours duquel le système dominant (µC) attend la zone de commande à l'intérieur de la série de bits correspondante.

23. Circuit selon la revendication 21 ou 22, dans lequel les étages de commutation (B8) du multiplexeur (B2) sont commandés de manière que l'étage de commutation (B8) sélectionné par le démultiplexeur (DMX) chaque fois pour une opération d'écriture et/ou de lecture de l'étage de registre correspondant (FF), établit une liaison entre l'entrée parallèle (PE) et l'entrée de bit (BE) ou la sortie de bit (BA) et la sortie parallèle (PA) de la paire d'étages de registre et d'étages de commutation concernés, et pour chacune des paires d'étages de commutation et d'étages de registre restante, une liaison entre la sortie de bit (BA) et l'entrée de bit (BE) de l'étage de registre (FF) correspondant.

24. Circuit selon une des revendications 12 à 23, dans lequel, entre le dispositif de conversion (B1, B2), le registre d'interface (B4) et les sous-systèmes FB1, FB2), est monté un aiguillage (B3) commandable par un signal d'écriture et de lecture et qui, quand il reçoit un signal de commande d'écriture, peut envoyer la série de bits stockée dans le registre d'interface (B4) à la fois au dipositif de conversion (B1, B2) et aux sous-systèmes (FB1, FB2), tandis que, quand il reçoit un signal de commande de lecture, il peut diriger vers le dispositif de conversion (B1, B2) la série de bits lue dans le sous-système adressé.

25. Circuit selon la revendication 24, dans lequel les séries de bits transmises entre l'aiguillage (B3) et les sous-systèmes (FB1, FB2) peuvent être envoyées à un générateur de bits de contrôle (B5) par lequel peut être produit à partir du modèle de bit de la série de bits correspondante un bit de contrôle actuel (aPB) qui peut être comparé, au moyen d'un dispositif de comparaison de bits de contrôle (X8) à un bit de contrôle (gPB) produit précédemment pour le même sous-système (FB1, FB2) et un bit de résultat de comparaison ainsi obtenu peut être inséré comme bit de commande dans la série de bits à envoyer au système dominant (µC).

26. Circuit selon la revendication 25, dans lequel le générateur de bits de contrôle (B5) présente des organes XOR (X1 à X7) montés en série et dont le nombre est inférieur d'une unité au nombre maximal de bits de données du champ de données, chaque organe XOR possédant deux entrées et une sortie, et aux deux entrées d'un premier organe XOR (X1) peuvent être amenés le premier et le second bits de la série de bits à contrôler, tandis qu'aux deux entrées des autres organes XOR (X2 à X7) peuvent être amenés chaque fois un autre bit de la série de bits à contrôler ou le signal de sortie de l'organe XOR précédent, le bit de contrôle pouvant être saisi à la sortie du dernier organe XOR (X7).

27. Circuit selon la revendication 26, dans lequel au dernier organe XOR (X7) fait suite un autre organe XOR (X8) constituant dispositif de comparaison de bits de contrôle, et comportant également deux entrées XOR et une sortie XOR, et à la première de ces deux entrées peut être amené chaque fois le bit de contrôle (aPB) produit, tandis qu'à la deuxième entrée peut être amené le bit de commande (gPB) produit antérieurement, un signal indicateur de changement, en particulier un signal d'état (Q/N) pouvant être saisi à la sortie de l'autre organe XOR (X8) et utilisé comme signal de comparaison de bits de contrôle.

28. Circuit selon une des revendications 25 à 27, dans lequel chaque bit de contrôle produit (aPB) peut être inscrit dans un registre de bits de contrôle et envoyé à la seconde entrée de l'autre organe XOR (X8) pour comparaison avec un bit de contrôle produit ensuite.

29. Circuit selon une des revendications 12 à 28, dans lequel au moins une partie des sous-systèmes (FB 1, FB2) comporte chacun un registre de champ de données (DR) et un décodeur d'adresses (AD) qui, lorsqu'est obtenue la série de bits d'adresses définie pour le sous-système (FB1, FB2), libère le registre de champ de données (DR) pour écriture ou lecture.

30. Circuit selon la revendication 29, dans lequel le registre de champ de données (DR) présente des étages de registre de champ de données (DS) dont le nombre dépasse d'une unité le nombre de bits de données prédéfini pour le sous-système (FB1, FB2) considéré, un des étages (DS) étant utilisable comme registre de bits de contrôle.

31. Circuit selon la revendication 29 ou 30, dans lequel le registre de champ de données (DR) présente une entrée de retour à l'état initial (RS) par laquelle le contenu de la mémoire du registre de champ de données (DR) peut être ramené, après une opération de lecture, à un état initial prédéfini.
